# EUROPEAN PATENT SPECIFICATION

(11) **EP 4 470 765 B1**
(45) Date of publication and mention of the grant of the patent: **14.10.2026**
(21) Application number: 23220699.5
(22) Date of filing: 29.12.2023
(51) Int. Cl.: B32B 3/12, A47C 27/08, B32B 3/26, B32B 5/02, B32B 15/082, B32B 15/085, B32B 15/09, B32B 15/14, B32B 15/20, B32B 27/12, B32B 27/30, B32B 27/32, B32B 27/36, B32B 27/40

(54) **INFLATABLE BED**
AUFBLASBARES BETT
LIT GONFLABLE

(30) Priority: 30.05.2023 CN 202321350931 U; 30.05.2023 CN 202321353446 U
(43) Date of publication of application: 04.12.2024
(60) Divisional application: 24154907.0 / 4 670 957
(73) Proprietor: Bestway Inflatables & Material Corp., Shanghai 201812 (CN)
(72) Inventor: ZENG, Xianglin, SHANGHAI, 201812 (CN)
(74) Representative: Inchingalo, Simona

(56) References cited:
- CN-A- 107 224 139
- CN-U- 217 827 338
- CN-U- 217 827 340

## Description

### CROSS-REFERENCE TO RELATED APPLICATION

This Application claims priority from Chinese Application CN202321350931.5 filed May 30, 2023 in China and from Chinese Application CN202321353446.3 filed May 30, 2023 in China.

### BACKGROUND

### 1. Field

Example embodiments relate to an inflatable pad, and in particular to an inflatable pad for wild camping.

### 2. Description of Related Art

When camping in the wild, due to the cold and hard ground, campers often want a conveniently portable inflatable pad that provides heat insulation and cushioning. Such an inflatable pad plays an important role in reducing heat transfer between a camper and the surface on which the inflatable pad is placed. Typically, a camper sleeps on top of a top sheet of an inflatable pad, and the inflatable pad is placed with its bottom sheet on the ground. If an inflatable pad can successfully prevent or significantly reduce the heat transfer between its top sheet and its bottom sheet (in other words, the inflatable pad has good heat insulation performance), thereby avoiding the impact of low temperature from the ground on the camper, the camper can retain sufficient heat, thereby enjoying comfortable sleep and being adequately prepared for activities the next day. The heat insulation performance of an inflatable pad can be represented by an R-value (thermal resistance value). The R-value can be tested using a standard testing method, such as testing according to the American Society for Testing and Materials (ASTM) F3340-18 standard. The larger the R-value, the better the heat insulation performance of the inflatable pad. Manufacturers recommend a suitable environment for the inflatable pad to a user on the basis of the tested R-value of the inflatable pad. An inflatable pad with a low R-value is suitable only for a warmer environment, while an inflatable pad with a high R-value is suitable for a colder environment.

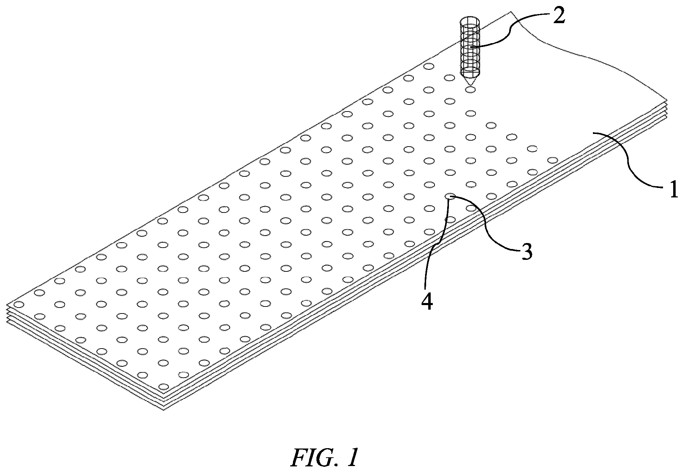

An inflatable pad typically comprises the top sheet and the bottom sheet connected to each other to form an inflatable chamber therebetween. To achieve a better heat insulation performance (higher R-value), some inflatable pads have heat insulation cotton or aluminum-plated films arranged within the inflatable chambers. An aluminum-plated film used in inflatable pads on the market are typically formed by single-sided aluminum plating on a PET (polyethylene terephthalate) film. Since an aluminum-plated PET film cannot be welded to the top sheet or the bottom sheet by using methods such as high frequency or hot pressing, before the aluminum-plated film is arranged within the inflatable chamber, the aluminum-plated film should be perforated, so that the top sheet and the bottom sheet can be welded to each other through the perforations in the aluminum-plated film, eliminating the need to include the aluminum-plated film, which cannot be welded to the top sheet or the bottom sheet, in a welding process. As shown in FIG. 1, in a mass production process of inflatable pads, in order to improve production efficiency, a plurality of single-sided aluminum-plated films 1 may be stacked together, and batch perforation operations are performed on the plurality of single-sided aluminum-plated films using a laser cutting head 2. However, in the process of laser cutting the plurality of single-sided aluminum-plated films, edges 4 of the perforations 3 tend to stick together due to heat affecting the single-sided aluminum-plated films, and separating these aluminum-plated films later may result in tearing or damage to adhesive positions of the films, thereby reducing the yield. CN 217 827 338 U relates to an inflatable bed.

### SUMMARY

Example embodiments may address at least the above problems and/or disadvantages and other disadvantages not described above. Also, example embodiments are not required to overcome the disadvantages described above, and may not overcome any of the problems described above.

According to an aspect of an example embodiment, an inflatable pad comprises: a top sheet and a bottom sheet connected to the top sheet, such that the top sheet and the bottom sheet jointly define an inflatable chamber therebetween; wherein at least one of the top sheet and the bottom sheet comprises: an outer layer comprising a fabric layer facing away from the inflatable chamber, an inner layer facing the inflatable chamber, the inner layer comprising a polymer material layer, and a heat insulation film disposed between the outer layer and the inner layer, the heat insulation film comprising a polymer substrate and a metal plating layer plated on the polymer substrate.

The inflatable pad may further comprise: a connecting sheet disposed within the inflatable chamber between the top sheet and the bottom sheet, the connecting sheet comprising: a plurality of first welding regions and a plurality of second welding regions staggered with respect to the plurality of first welding regions, wherein the plurality of first welding regions are welded to the top sheet and the plurality of second welding regions are welded to the bottom sheet.

The inflatable pad may further comprise: at least one heat insulation sheet disposed within the inflatable chamber, wherein the heat insulation sheet comprises a polymer substrate and a metal plating layer plated on the polymer substrate.

The at least one heat insulation sheet may be disposed between the top sheet and the connecting sheet and may comprise a plurality of openings, wherein each of the plurality of openings is configured to allow a corresponding one of the plurality of first welding regions to be in contact with and welded to the top sheet.

The at least one heat insulation sheet may be arranged between the connecting sheet and the bottom sheet and may comprise a plurality of openings, each of the plurality of openings being configured to allow a corresponding one of the plurality of second welding regions to be in contact with and welded to the bottom sheet.

The at least one heat insulation sheet may comprise a first heat insulation sheet and a second heat insulation sheet; wherein the first heat insulation sheet is disposed between the top sheet and the connecting sheet and comprises a plurality of first openings, wherein each of the plurality first openings is configured to allow a corresponding one of the plurality of first welding regions to be in contact with and welded to the top sheet; and wherein the second heat insulation sheet is disposed between the connecting sheet and the bottom sheet and comprises a plurality of second openings, wherein each of the plurality of second openings is configured to allow a corresponding one of the plurality of second welding regions to be in contact with and welded to the bottom sheet.

The outer layer may be a fabric layer, the inner layer may be a polymer material layer, and the heat insulation film may be bonded to the outer layer and the inner layer.

The metal plating layer may comprise a first metal plating layer plated on a front side of the polymer substrate and a second metal plating layer plated on a back side of the polymer substrate.

The polymer substrate may be made of one of polyvinyl chloride, polypropylene, and polyethylene terephthalate; and the metal plating layer is made of one of aluminum, zinc, copper, silver, and gold.

The polymer substrate may be made of polyethylene terephthalate, and the metal plating layer is made of aluminum.

The inner layer may be made of one of a thermoplastic polyurethane elastomer material, a polyvinyl chloride material, and a polyurethane material.

The top sheet may comprise a plurality of first welding regions and the bottom sheet comprises a plurality of second welding regions, wherein each of the plurality of first welding regions is welded to a corresponding one of the plurality of second welding regions.

The plurality of first welding regions may be evenly distributed on the top sheet and the plurality of second welding regions are evenly distributed on the bottom sheet.

The inflatable pad may further comprise: a lateral confining sheet; wherein a periphery of the top sheet is connected to a top edge of the lateral confining sheet, and a periphery of the bottom sheet is connected to a bottom edge of the lateral confining sheet, such that the bottom sheet is connected to the top sheet via the lateral confining sheet, and the top sheet, the bottom sheet, and the lateral confining sheet jointly define the inflatable chamber therebetween.

The top sheet and the bottom sheet may each comprise the outer later and the inner layer, and the inner layer of the top sheet and the inner layer of the bottom sheet are made of the same polymer material.

The polymer material may comprise thermoplastic polyurethane elastomer, polyvinyl chloride, or polyurethane.

The top sheet and the bottom sheet may each comprise the outer layer and the inner layer, and the inner layer of the top sheet, the inner layer of the bottom sheet, and the connecting sheet may be made of the same polymer material.

The polymer material may comprise thermoplastic polyurethane elastomer, polyvinyl chloride, or polyurethane.

The polymer substrate of the heat insulation film may be made of comprises polyvinyl chloride, polypropylene, or polyethylene terephthalate.

The polymer substrate of the heat insulation film may be made of one of polyvinyl chloride, polypropylene and polyethylene terephthalate, and the polymer substrate of the heat insulation sheet may be made of one of polyvinyl chloride, polypropylene and polyethylene terephthalate.

The metal plating layer of the heat insulation film may be made of aluminum, zinc, copper, silver, or gold.

The metal plating layer of the heat insulation film may be made of one of aluminum, zinc, copper, silver and gold, and the metal plating layer of the heat insulation sheet may be made of one of aluminum, zinc, copper, silver and gold.

The heat insulation film may have a thickness of 5 micrometers to 50 micrometers.

The heat insulation film may have a thickness of 5 micrometers to 50 micrometers, and the heat insulation sheet may have a thickness of 5 micrometers to 50 micrometers.

At least one of the plurality of first welding regions and the plurality of second welding regions may be evenly distributed on the connecting sheet.

The connecting sheet may further comprise a plurality of lightening holes, the plurality of lightening holes being staggered from the plurality of first welding regions and the plurality of second welding regions.

According to an aspect of another example embodiment, an inflatable pad comprises: a top sheet and a bottom sheet connected to the top sheet, such that the top sheet and the bottom sheet jointly define an inflatable chamber therebetween; a connecting sheet disposed within the inflatable chamber and comprising a plurality of first welding regions and a plurality of second welding regions staggered with respect to the plurality of first welding regions, wherein the plurality of first welding regions are welded to the top sheet and the plurality of second welding regions are welded to the bottom sheet.

At least one of the plurality of first welding regions and the plurality of second welding regions may be evenly distributed on the connecting sheet.

The connecting sheet may further comprise a plurality of lightening holes which are staggered with respect to both the plurality of first welding regions and the plurality of second welding regions.

At least one of the top sheet and the bottom sheet may comprise: an outer layer comprising a fabric layer facing away from the inflatable chamber, an inner layer facing the inflatable chamber, and a heat insulation film disposed between the outer layer and the inner layer, the heat insulation film comprising a polymer substrate and a metal plating layer plated on the polymer substrate.

The inner layer and the connecting sheet may be made of one of a thermoplastic polyurethane elastomer material, a polyvinyl chloride material, and a polyurethane material.

The outer layer may be a fabric layer, the inner layer may be a polymer material layer, and the heat insulation film may be bonded to the outer layer and the inner layer.

The metal plating layer may comprise a first metal plating layer plated on a front side of the polymer substrate and a second metal plating layer plated on a back side of the polymer substrate.

The polymer substrate may be made of one of polyvinyl chloride, polypropylene, and polyethylene terephthalate; and the metal plating layer is made of one of aluminum, zinc, copper, silver, and gold.

The polymer substrate may be made of polyethylene terephthalate, and the metal plating layer is made of aluminum.

The inner layer may be made of one of a thermoplastic polyurethane elastomer material, a polyvinyl chloride material, and a polyurethane material.

The inflatable pad of this example embodiment may further comprise: a lateral confining sheet; wherein a periphery of the top sheet is connected to a top edge of the lateral confining sheet, and a periphery of the bottom sheet is connected to a bottom edge of the lateral confining sheet, such that the bottom sheet is connected to the top sheet via the lateral confining sheet, and the top sheet, the bottom sheet, and the lateral confining sheet jointly define the inflatable chamber therebetween.

According to an aspect of another example embodiment, an inflatable pad comprises: a top sheet and a bottom sheet connected to the top sheet, such that the top sheet and the bottom sheet jointly define an inflatable chamber therebetween; and at least one heat insulation sheet disposed within the inflatable chamber and comprising a polymer substrate and a metal plating layer plated on the polymer substrate, wherein the metal plating layer comprises a first metal plating layer plated on a front side of the polymer substrate and a second metal plating layer plated on a back side of the polymer substrate.

The inflatable pad of this example embodiment may further comprise: a connecting sheet disposed within the inflatable chamber and comprising a plurality of first welding regions and a plurality of second welding regions staggered with respect to the plurality of first welding regions, wherein the plurality of first welding regions are welded to the top sheet, and the plurality of second welding regions are welded to the bottom sheet.

The at least one heat insulation sheet may be disposed between the top sheet and the connecting sheet and may comprise a plurality of openings, wherein each of the plurality of openings is configured to allow a corresponding one of the plurality of first welding regions to be in contact with and welded to the top sheet.

The at least one heat insulation sheet may be disposed between the connecting sheet and the bottom sheet and may comprise a plurality of openings, wherein each of the plurality of openings is configured to allow a corresponding one of the plurality of second welding regions to be in contact with and welded to the bottom sheet.

The at least one heat insulation sheet may comprise: a first heat insulation sheet and a second heat insulation sheet; wherein the first heat insulation sheet is disposed between the top sheet and the connecting sheet and comprises a plurality of first openings, wherein each of the plurality first openings is configured to allow a corresponding one of the plurality of first welding regions to be in contact with and welded to the top sheet; and wherein the at least one second heat insulation sheet is disposed between the connecting sheet and the bottom sheet and comprises a plurality of second openings, wherein each of the plurality of second openings is configured to allow a corresponding one of the plurality of second welding regions to be in contact with and welded to the bottom sheet.

At least one of the plurality of first welding regions and the plurality of second welding regions may be evenly distributed on the connecting sheet.

The connecting sheet may further comprise a plurality of lightening holes which are staggered with respect to both the plurality of first welding regions and the plurality of second welding regions.

Each of the top sheet and the bottom sheet may comprise: an outer layer comprising a fabric layer facing away from the inflatable chamber; and an inner layer facing the inflatable chamber; wherein each of the inner layer of the top sheet, the inner layer of the bottom sheet, and the connecting sheet is made of a same polymer material.

Each of the inner layer of the top sheet, the inner layer of the bottom sheet, and the connecting sheet may be made of one of a thermoplastic polyurethane elastomer material, a polyvinyl chloride material, and a polyurethane material.

At least one of the top sheet and the bottom sheet comprises: an outer layer facing away from the inflatable chamber, an inner layer facing the inflatable chamber, and a heat insulation film disposed between the outer layer and the inner layer, wherein the heat insulation film comprises a polymer substrate and a metal plating layer plated on at least one of a front side of the polymer substrate and a back side of the polymer substrate.

The outer layer may be a fabric layer, the inner layer may be a polymer material layer, and the heat insulation film may be bonded to the outer layer and the inner layer.

The inflatable pad of this example embodiment may further comprise: a lateral confining sheet; wherein a periphery of the top sheet is connected to a top edge of the lateral confining sheet, and a periphery of the bottom sheet is connected to a bottom edge of the lateral confining sheet, such that the top sheet, the bottom sheet, and the lateral confining sheet jointly define the inflatable chamber therebetween.

The polymer may be made of one of polyvinyl chloride, polypropylene, and polyethylene terephthalate; and the metal plating layer may be made of one of aluminum, zinc, copper, silver, and gold.

The polymer substrate may be made of polyethylene terephthalate, and the metal plating layer may be made of aluminum.

The heat insulation sheet may have a thickness of 5 micrometers to 50 micrometers.

The metal plating layer may have a thickness of 100 angstroms to 800 angstroms.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a schematic diagram of simultaneously perforating multiple single-sided aluminum-plated films according to the related art;
FIG. 2 is a schematic perspective view of an inflatable pad according to a first example embodiment;
FIG. 3 is a schematic exploded view of an inflatable pad according to a first example embodiment ;
FIG. 4A is a partial schematic diagram of an inflatable pad according to the first example embodiment;
FIG. 4B is a schematic enlarged view of region A of FIG. 4A;
FIG. 4C is a partial sectional view of the inflatable pad of FIG. 4A;
FIG. 5A is a schematic structural diagram of a first example of a top sheet of an inflatable pad according to the first example embodiment ;
FIG. 5B is a schematic structural diagram of a second example of a top sheet of an inflatable pad according to the first example embodiment;
FIG. 5C is a schematic structural diagram of a third example of a top sheet of an inflatable pad according to the first example embodiment;
FIG. 6 is a schematic exploded view of an inflatable pad according to a second example embodiment;
FIG. 7A is a partial schematic diagram of an inflatable pad according to the second example embodiment;
FIG. 7B is a schematic enlarged view of region A of FIG. 7A;
FIG. 7C is a partial sectional view of the inflatable pad of FIG. 7A;
FIG. 8 is a schematic structure diagram of a first heat insulation sheet of an inflatable pad according to the second example embodiment;
FIG. 9 is a schematic structure diagram of a top sheet of an inflatable pad according to an example embodiment;
FIG. 10A is a partial schematic diagram of an inflatable pad according to a third example embodiment;
FIG. 10B is a schematic enlarged view of region B of FIG. 10A;
FIG. 10C is a partial sectional view of the inflatable pad of FIG. 10A;
FIG. 11A is a partial schematic diagram of an inflatable pad according to a fourth example embodiment;
FIG. 11B is a schematic enlarged view of region C of FIG. 11A;
FIG. 11C is a partial sectional view of the inflatable pad of FIG. 11A;
FIG. 12A is a partial schematic diagram of an inflatable pad according to a fifth example embodiment;
FIG. 12B is a schematic enlarged view of region D in FIG. 12A;
FIG. 12C is a partial sectional view of the inflatable pad in FIG. 12A;
FIG. 13 is a schematic exploded view of an inflatable pad according to a sixth example embodiment;
FIG. 14 is a schematic exploded view of an inflatable pad according to a seventh example embodiment;
FIG. 15 is a schematic perspective view of an inflatable pad according to an eighth example embodiment; and
FIG. 16 is a schematic exploded view of an inflatable pad according to the eighth example embodiment.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described here in detail.

In the description, the expression of the structural positions of various components, such as upper, lower, top, and bottom, are not absolute but relative. The orientation expressions are appropriate when the various components are arranged as shown in the figures, but should change accordingly when the positions of the various components in the figures change.

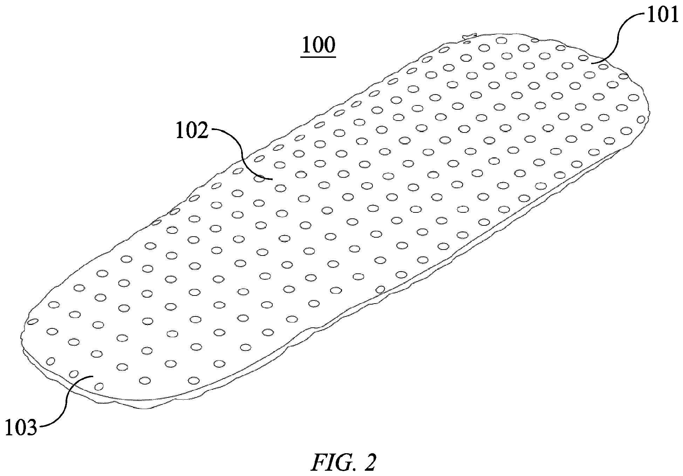

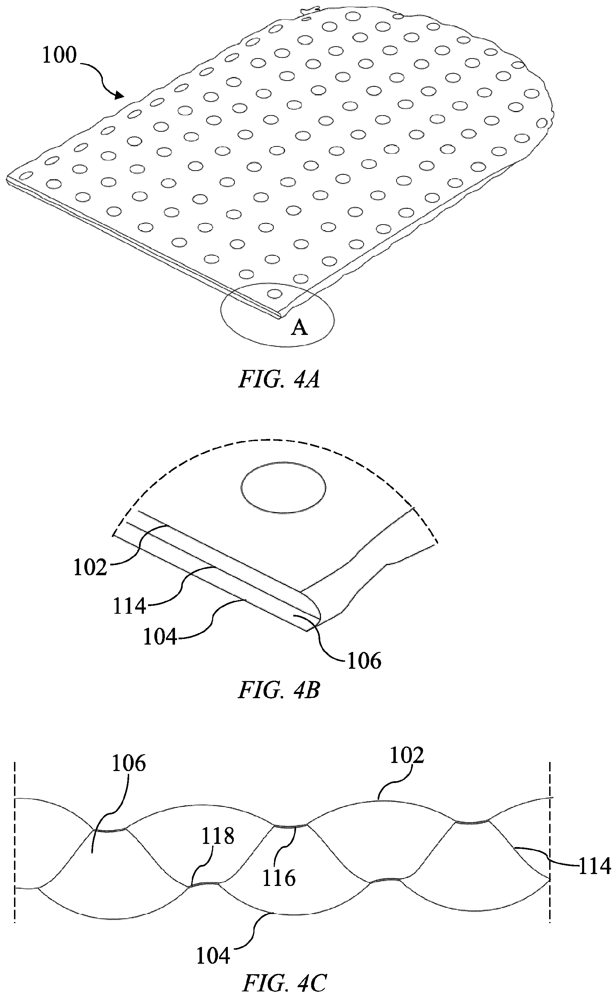

FIG. 2 through FIG. 4C illustrate an inflatable pad 100 and components thereof according to a first example embodiment.

With reference to FIG. 2, the inflatable pad 100 comprises a head portion 101 for supporting the head of a user and a tail portion 103 for supporting the feet of the user. In the example embodiment shown in FIG. 2, the head portion 101 of the inflatable pad 100 has a width greater than that of the tail portion 103 of the inflatable pad 100, so that the inflatable pad 100 has a shape that is wider at the head portion and narrower at the tail portion, resembling a cone shape as a whole. It should be understood, however, that this is merely an example, and that the inflatable pad may alternately have another suitable shape such as a rectangle or an oval.

With reference to FIG. 2 through FIG. 4C, the inflatable pad 100 comprises a top sheet 102 and a bottom sheet 104. The top sheet 102 and the bottom sheet 104 are connected to each other to form an inflatable chamber 106 therebetween. The top sheet 102 is configured for the user to sit or lie on, and the bottom sheet 104 is configured to be in contact with the ground. The top sheet 102 and the bottom sheet 104 may have substantially the same shapes and sizes, and a periphery of the top sheet 102 may be welded to a periphery of the bottom sheet 104 to form the inflatable chamber 106 between the top sheet 102 and the bottom sheet 104. At least one of the top sheet 102 and the bottom sheet 104 comprises an outer layer facing away from the inflatable chamber 106 and an inner layer facing the inflatable chamber 106. The outer layer may be a fabric layer to provide a comfortable touch (the outer layer may also be referred to as a comfort layer). The outer layer may be a non-flocked fabric layer or a flocked fabric layer. The inner layer may be a polymer material layer, and can be made of thermoplastic polyurethane elastomer (TPU), polyvinyl chloride (PVC), polyurethane (PU), or other suitable polymer materials.

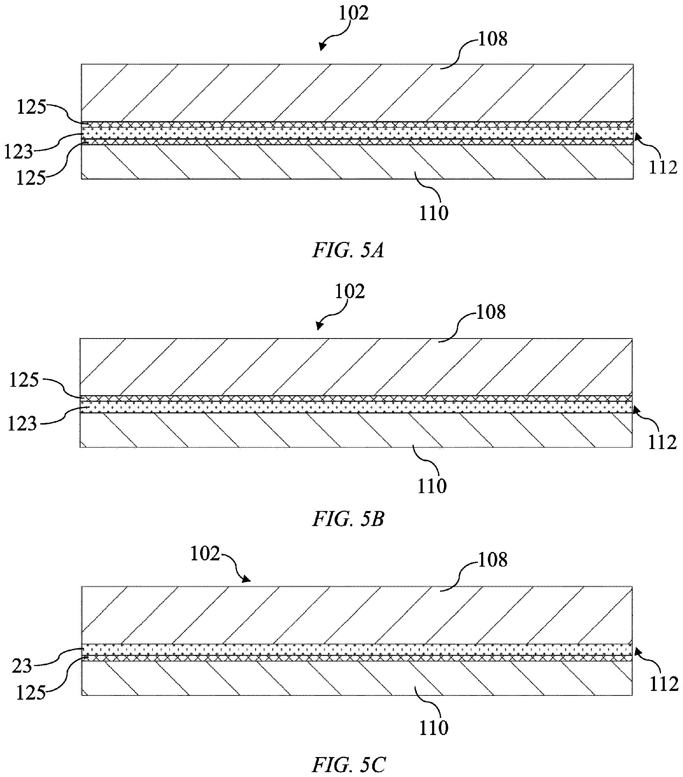

A heat insulation film is sandwiched between the outer layer and the inner layer, wherein the heat insulation film comprises a polymer substrate and at least one metal plating layer plated on the polymer substrate, in particular on at least one of a front side and a back side of the polymer substrate, which will be further described in detail below. The top sheet 102 and the bottom sheet 104 may have the same or different structures. FIG. 5A through FIG. 5C show a plurality of examples of the top sheet 102, and an example structure of the top sheet 102 will be described below with reference to FIG. 5A to FIG. 5C.

With reference to FIG. 5A, in a first example, the top sheet 102 comprises an outer layer 108 facing away from the inflatable chamber 106, an inner layer 110 facing the inflatable chamber 106, and a heat insulation film 112 sandwiched between the outer layer 108 and the inner layer 110. The heat insulation film 112 comprises a polymer substrate 123 and two metal plating layers 125 plated on the polymer substrate 123, in particular on a front side and a back side of the polymer substrate 123. This means that the metal plating layer may comprise a first metal plating layer plated on a front side of the polymer substrate 123 and a second metal plating layer plated on a back side of the polymer substrate 123. In other words, the heat insulation film 112 of the top sheet 102 in FIG. 5A is double-sided metal-plated. Since thermal convection and thermal radiation are significant means of heat transfer in an inflatable pad, a double-sided metal-plated heat insulation film may effectively reflect thermal radiation. The heat radiated by the human body can be reflected back to the human body, reducing heat loss and significantly improving the heat insulation effect of the inflatable pad.

With reference to FIG. 5B, in a second example, the top sheet 102 comprises an outer layer 108 facing away from the inflatable chamber 106, an inner layer 110 facing the inflatable chamber 106, and a heat insulation film 112 sandwiched between the outer layer 108 and the inner layer 110. In this example, the heat insulation film 112 comprises a polymer substrate 123 and a metal plating layer 125 plated on the polymer substrate 123, in particular on a front side of the polymer substrate 123 (i.e., the surface of the polymer substrate 123 close to the outer layer 108). In other words, the heat insulation film 112 of the top sheet 102 of FIG. 5B is single-sided metal-plated and the metal plating layer 125 is between the outer layer 108 and the polymer substrate 123.

With reference to FIG. 5C, in a third example, the top sheet 102 comprises an outer layer 108 facing away from the inflatable chamber 106, an inner layer 110 facing the inflatable chamber 106, and a heat insulation film 112 sandwiched between the outer layer 108 and the inner layer 110. In this example, the heat insulation film 112 comprises a polymer substrate 123 and a metal plating layer 125 plated on the polymer substrate 123, in particular on a back side of the polymer substrate 123 (i.e., the surface of the polymer substrate 123 close to the inner layer 110). In other words, the heat insulation film 112 of the top sheet 102 of FIG. 5C is single-sided metal-plated and the metal plating layer 125 is between the polymer substrate 123 and the inner layer 110.

In some other examples, the top sheet of the inflatable pad may include only an outer layer and an inner layer, without including any single-sided metal-plated or double-sided metal-plated heat insulation film, while the structure of the bottom sheet may be similar to the structure of the top sheet as described in any of the above three examples, i.e., including an outer layer, an inner layer, and a heat insulation film. This will be more comprehensible from the following description.

With continued reference to FIG. 5A to FIG. 5C, the polymer substrate 123 of the heat insulation film 112 may be made of suitable polymer materials, such as polyvinyl chloride (PVC), polypropylene (PP), polyethylene terephthalate (PET), etc. The metal plating layer 125 of the heat insulation film 112 may be made of suitable metal materials such as aluminum, zinc, copper, silver, or gold. Further optionally, the polymer substrate 123 of the heat insulation film 112 may be made of PET, and the metal plating layer 125 of the heat insulation film 112 may be made of aluminum. Optionally, the heat insulation film 112 may be bonded to the outer layer 108 and the inner layer 110 with an adhesive to form a multi-layer composite structure.

The metal plating layer of the heat insulation film may have a thickness much smaller than that of its polymer substrate. Optionally, the heat insulation film formed by the polymer substrate and the two metal plating layers on the front side and the back side of the polymer substrate may have an overall thickness of 5 micrometers to 50 micrometers, for example, 20 micrometers. Optionally, the heat insulation film formed by the polymer substrate and the single-sided metal plating layer on the front side (or the back side) of the polymer substrate may have an overall thickness of 5 micrometers to 50 micrometers, for example, 20 micrometers. Optionally, the single metal plating layer of the heat insulation film may have a thickness of 100 angstroms to 800 angstroms, for example, 335 angstroms.

As mentioned above, optionally, the top sheet 102 and the bottom sheet 104 of the inflatable pad 100 may have the same structure. For this reason, in the attached figures 5a-5c it is indicated, as an example, only the top sheet 102, considering that the bottom sheet 104 presents the same structure and could be represented in the same way, simply changing the reference number 102 into 104 and reversing the arrangement of the layers. In this case, each of the top sheet 102 and the bottom sheet 104 may comprise an outer layer, an inner layer, and a single-sided metal-plated heat insulation film. Alternately, each of the top sheet 102 and the bottom sheet 104 may comprise an outer layer, an inner layer and a double-sided metal-plated heat insulation film.

Optionally, the top sheet 102 and the bottom sheet 104 of the inflatable pad 100 may have different structures. In this case, one of the top sheet 102 and the bottom sheet 104 may comprise an outer layer, an inner layer, and a single-sided metal-plated or double-sided metal-plated heat insulation film, and the other of the top sheet 102 and the bottom sheet 104 may include only an outer layer and an inner layer. Alternately, the top sheet 102 and the bottom sheet 104 may each comprise an outer layer, an inner layer, and a single-sided metal-plated or double-sided metal-plated heat insulation film. As an example, one of the top sheet 102 and the bottom sheet 104 may comprise a single-sided metal-plated heat insulation film, while the other of the top sheet 102 and the bottom sheet 104 may comprise a double-sided metal-plated heat insulation film. As another example, the top sheet 102 and the bottom sheet 104 may each comprise a single-sided metal-plated heat insulation film, but the metal plating layers of the heat insulation films of the top sheet 102 and the bottom sheet 104 may be plated on different surfaces of the respective polymer substrates.

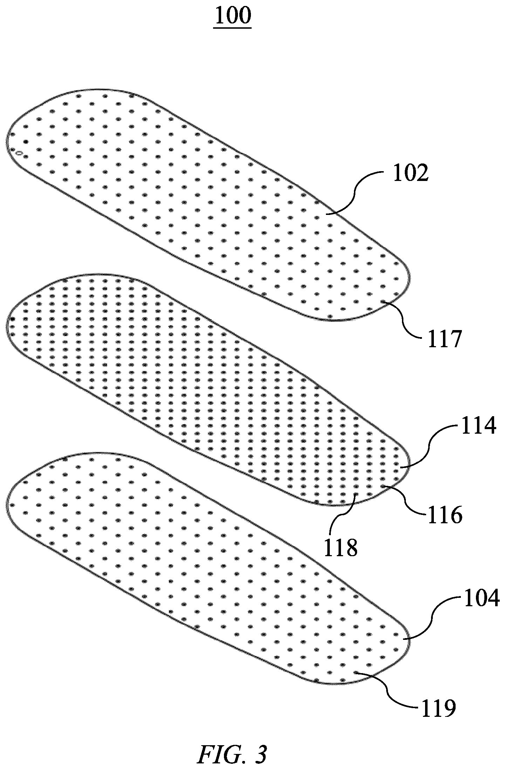

Referring back to FIG. 3 through FIG. 4C, the inflatable pad 100 further comprises a connecting sheet 114. The connecting sheet 114 is arranged within the inflatable chamber 106 between the top sheet 102 and the bottom sheet 104. The connecting sheet 114 may be made of TPU, PVC, PU or other suitable polymer materials. According to one or more example embodiments, in order to facilitate connection of the top sheet 102 and the bottom sheet 104 to the connecting sheet 114 by means of welding, the connecting sheet 114, the inner layer of the top sheet 102 and the inner layer of the bottom sheet 104 may all be made of a same polymer material, such as one of TPU, PVC, PU, and any other suitable polymer material. Optionally, the connecting sheet 114, the inner layer of the top sheet 102 and the inner layer of the bottom sheet 104 may be made of different polymer materials, such as PVC for the connecting sheet 114, and TPU for the inner layer of the top sheet 102 and the inner layer of the bottom sheet 104.

The connecting sheet 114 comprises a plurality of first welding regions 116 and a plurality of second welding regions 118, wherein the plurality of first welding regions 116 and the plurality of second welding regions 118 are staggered with respect to each other, the plurality of first welding regions 116 are welded to the inner layer of the top sheet 102, and the plurality of second welding regions 118 are welded to the inner layer of the bottom sheet 104. In other words, a plurality of welding positions there the connecting sheet 114 is connected to the top sheet 102 are staggered with respect to a plurality of welding positions where the connecting sheet 114 is connected to the bottom sheet 104. This can aid in preventing the insufficient welding strength which the connecting sheet welded multiple times at the same position may have.

The plurality of first welding regions 116 are evenly distributed on the connecting sheet 114, and the plurality of second welding regions 118 are evenly distributed on the connecting sheet 114, so that the top sheet 102 and the bottom sheet 104 are uniformly welded to the connecting sheet 114 at a plurality of positions, thereby enabling the inflatable pad 100 to remain substantially flat when fully inflated, as shown, for example, in FIG. 2. In an example aspect, the plurality of first welding regions 116 are evenly distributed in an array on the connecting sheet 114, and the top sheet 102 correspondingly comprises a plurality of third welding regions 117 evenly distributed in an array, each first welding region 116 being welded to the corresponding third welding region 117; and the plurality of second welding regions 118 are also evenly distributed in an array on the connecting sheet 114, and the bottom sheet 104 correspondingly comprises a plurality of fourth welding regions 119 evenly distributed in an array, each second welding region 118 being welded to the corresponding fourth welding region 119.

According to an example aspect, the first welding regions 116, the second welding regions 118, the third welding regions 117 and the fourth welding regions 119 have the same shape and are in the form of circular dots. It should be understood that, in some variations, the first welding regions, the second welding regions, the third welding regions, and the fourth welding regions may alternately have other suitable shapes such as a strip, a square, an oval, a triangle, a polygon, and on the like.

The connecting sheet 114 has substantially the same shape as the top sheet 102 and the bottom sheet 104. Optionally, the connecting sheet 114 may have a size slightly smaller than those of the top sheet 102 and the bottom sheet 104, such that after the periphery of the top sheet 102 and the periphery of the bottom sheet 104 are welded to each other and the third welding regions 117 of the top sheet 102 and the fourth welding regions 119 of the bottom sheet 104 are welded to the connecting sheet 114 respectively, there is a gap between the periphery of the connecting sheet 114 and a welding seam of the periphery of the top sheet 102 and the periphery of the bottom sheet 104, in order to enable air passage between the space between the connecting sheet 114 and the top sheet 102 and the space between the connecting sheet 114 and the bottom sheet 104, to enable inflation of the entire inflatable pad 100. Optionally, the connecting sheet 114 may also have a size substantially the same as that of the top sheet 102 and the bottom sheet 104. The periphery of the top sheet 102, the periphery of the connecting sheet 114 and the periphery of the bottom sheet 104 are welded to one another, and one or more communication holes are formed in the connecting sheet 114 such that the air chamber formed between the top sheet 102 and the connecting sheet 114 is in communication with the air chamber formed between the connecting sheet 114 and the bottom sheet 104.

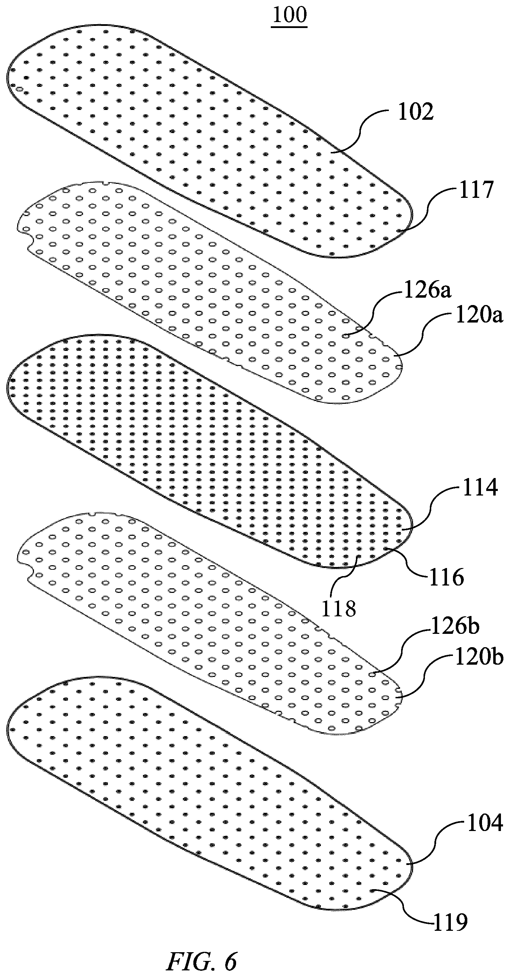

FIG. 6 through FIG. 8 show an inflatable pad and components thereof according to a second example embodiment. The inflatable pad according to the second example embodiment is similar to the inflatable pad according to the first embodiment, and the differences therebetween mainly lie in that in the inflatable pad according to the second example embodiment, a heat insulation sheet is further arranged between the top sheet and the connecting sheet and between the connecting sheet and the bottom sheet. Another difference between this second embodiment and the first embodiment described above, is that the heat insulation film may be not comprised in this embodiment and can be optional. The other main differences between the two example embodiments will be introduced below.

With reference to FIG. 6 through FIG. 8, the inflatable pad 100 comprises a top sheet 102 and a bottom sheet 104. The periphery of the top sheet 102 is connected to the periphery of the bottom sheet 104, such that the top sheet 102 and the bottom sheet 104 jointly define an inflatable chamber 106 therebetween. Also in this embodiment, each of the top sheet 102 and the bottom sheet 104 comprises an outer layer 108 comprising a fabric layer facing away from the inflatable chamber and an inner layer 110 facing the inflatable chamber. The top sheet is configured to a user to sit or lie on, and the bottom sheet 104 is configured to be in contact with the ground. The top sheet and the bottom sheet may have substantially the same shape and size. At least one heat insulation sheet 120 is disposed within the inflatable chamber 106 and comprises a polymer substrate 122 and a metal plating layer 124 plated on the polymer substrate. Preferably, the metal plating layer comprises a first metal plating layer on a front side of the polymer substrate and a second metal plating layer on a back side of the polymer substrate.

At least one of the top sheet 102 and the bottom sheet 104 comprises an outer layer 108 facing away from the inflatable chamber 106, an inner layer 110 facing the inflatable chamber 106. The outer layer may be a fabric layer to provide a comfortable touch. The outer layer may be a non-flocked fabric layer or a flocked fabric layer. The inner layer may be a polymer material layer, and may be made of TPU, PVC, PU, or other suitable polymer materials.

A heat insulation film 112 is sandwiched between the outer layer and the inner layer of at least one of the top sheet and the bottom sheet. As described with respect to the above example embodiment, the heat insulation film comprises a polymer substrate 123 and at least one metal plating layer 125 plated on at least one of a front side and a back side of the polymer substrate. The polymer substrate 123 of the heat insulation film may be made of suitable polymer materials, such as PVC, PP, PET, etc. The metal plating layer 125 of the heat insulation film may be made of suitable metal materials such as aluminum, zinc, copper, silver, or gold. The heat insulation film may be bonded to the outer layer and the inner layer with an adhesive to form a multi-layer composite structure. The metal plating layer of the heat insulation film may have a thickness much smaller than that of its polymer substrate. Optionally, the heat insulation film 112 formed by the polymer substrate and the two metal plating layers on the front side and the back side of the polymer substrate may have an overall thickness of 5 micrometers to 50 micrometers, for example, 20 micrometers. Optionally, the heat insulation film formed by the polymer substrate and the single-sided metal plating layer on the front side (or the back side) of the polymer substrate may also have an overall thickness of 5 micrometers to 50 micrometers, for example, 20 micrometers. Optionally, the single metal plating layer of the heat insulation film may have a thickness of 100 angstroms to 800 angstroms, for example, 335 angstroms.

Optionally, the top sheet 102 and the bottom sheet 104 of the inflatable pad 100 may have the same structure. In this case, each of the top sheet 102 and the bottom sheet 104 may comprise an outer layer 108, an inner layer 110 and a single-sided metal-plated heat insulation film 112. Alternatively, each of the top sheet 102 and the bottom sheet 104 may comprise an outer layer, an inner layer and a double-sided metal-plated heat insulation film. Optionally, the top sheet 102 and the bottom sheet 104 of the inflatable pad 100 may also have different structures. In this case, one of the top sheet 102 and the bottom sheet 104 may comprise an outer layer, an inner layer and a single-sided metal-plated or double-sided metal-plated heat insulation film, and the other of the top sheet 102 and the bottom sheet 104 may comprise only an outer layer and an inner layer. Alternately, the top sheet 102 and the bottom sheet 104 may each comprise an outer layer, an inner layer and a single-sided metal-plated or double-sided metal-plated heat insulation film. As an example, one of the top sheet 102 and the bottom sheet 104 may comprise a single-sided metal-plated heat insulation film, while the other of the top sheet 102 and the bottom sheet 104 may comprise a double-sided metal-plated heat insulation film. As another example, the top sheet 102 and the bottom sheet 104 may each comprise a single-sided metal-plated heat insulation film. The metal plating layers of the heat insulation films of the top sheet 102 and the bottom sheet 104 may be plated on the surface, facing the outer layer/inner layer, of the respective polymer substrate.

With continued reference to FIG. 6, FIGs. 7A-7C, and FIG. 8, the inflatable pad 100 may further comprise a connecting sheet 114. The connecting sheet 114 may be arranged within the inflatable chamber 106 between the top sheet 102 and the bottom sheet 104. The connecting sheet 114 may be made of TPU, PVC, PU, or other suitable polymer materials. Optionally, in order to facilitate connecting the top sheet 102 and the bottom sheet 104 to the connecting sheet 114 by means of welding, the connecting sheet 114, the inner layer of the top sheet 102, and the inner layer of the bottom sheet 104 may be made of the same polymer materials, such as one of TPU, PVC, PU, or other suitable polymer materials. Optionally, the connecting sheet 114, the inner layer of the top sheet 102 and the inner layer of the bottom sheet 104 may also be made of different polymer materials, such as PVC for the connecting sheet 114, and TPU for the inner layer of the top sheet 102 and the inner layer of the bottom sheet 104.

According to this example, the connecting sheet 114 comprises a plurality of first welding regions 116 and a plurality of second welding regions 118, wherein the plurality of first welding regions 116 and the plurality of second welding regions 118 are staggered from each other, the plurality of first welding regions 116 are welded to the inner layer of the top sheet 102, and the plurality of second welding regions 118 are welded to the inner layer of the bottom sheet 104. In other words, a plurality of welding positions at which the connecting sheet 114 is welded to the top sheet 102 may be staggered from a plurality of welding positions at which the connecting sheet 114 is welded to the bottom sheet 104. This can aid in preventing insufficient welding strength which the connecting sheet welded multiple times at the same position may result in.

The plurality of first welding regions 116 may be evenly distributed on the connecting sheet 114, and the plurality of second welding regions 118 may be evenly distributed on the connecting sheet 114, so that the top sheet 102 and the bottom sheet 104 are uniformly welded to the connecting sheet 114 at a plurality of positions, thereby the inflatable pad 100 being flat after being fully inflated. In an example aspect of this example embodiment, the plurality of first welding regions 116 may be evenly distributed in an array on the connecting sheet 114, and the top sheet 102 may correspondingly comprise a plurality of third welding regions 117 evenly distributed in an array, each first welding region 116 being welded to the corresponding third welding region 117; and the plurality of second welding regions 118 may also be evenly distributed in an array on the connecting sheet 114, and the bottom sheet 104 may correspondingly comprise a plurality of fourth welding regions 119 evenly distributed in an array, each second welding region 118 being welded to the corresponding fourth welding region 119.

In an aspect of an example embodiment, the first welding regions 116, the second welding regions 118, the third welding regions 117, and the fourth welding regions 119 may have the same shape and may be in the form of circular dots. However, in some variations this example embodiment, the first welding regions, the second welding regions, the third welding regions and the fourth welding regions may alternately have other suitable shapes such as a strip, a square, an oval, a triangle, a polygon, and so on.

In order to further improve a heat insulation performance of the inflatable pad 100, optionally, the inflatable pad 100 may further comprise a first heat insulation sheet 120a and a second heat insulation sheet 120b (which may also be hereinafter referred to as heat insulation sheets). The first heat insulation sheet 120a and the second heat insulation sheet 120b may each comprise a polymer substrate 122 and at least one metal plating layer 124 plated on at least one of a front side and a back side of the polymer substrate. The polymer substrate of the heat insulation sheet may be made of suitable polymer materials, such as PVC, PP, PET, etc. The metal plating layer of the heat insulation sheet may be made of suitable metal materials such as aluminum, zinc, copper, silver, or gold. Further, the polymer substrate of the heat insulation sheet may be made of PET, and the metal plating layer of the heat insulation sheet may be made of aluminum. Optionally, one metal plating layer of the heat insulation sheet may have a thickness of 100 angstroms to 800 angstroms, for example, 335 angstroms. Optionally, the polymer substrate of the heat insulation sheet may have a thickness of 5 micrometers to 50 micrometers, for example, 20 micrometers. Optionally, the heat insulation sheet may have a thickness of 5 micrometers to 50 micrometers, for example, 20 micrometers.

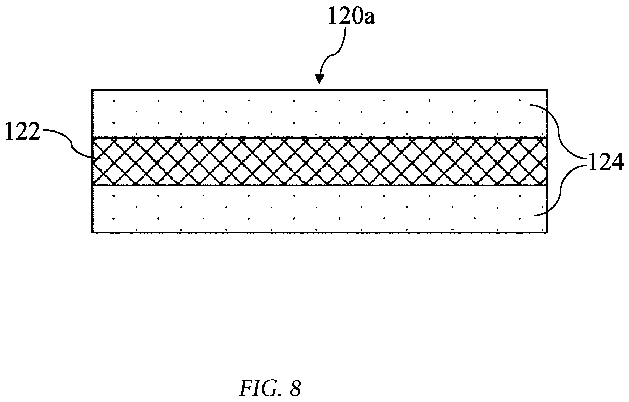

Optionally, the first heat insulation sheet 120a and the second heat insulation sheet 120b may have the same structure. Figure 8 shows the first heat insulation sheet 120a, but the same structure can be referred to the second heat insulation sheet 120b. The structure of the first heat insulation sheet 120a and the second heat insulation sheet 120b will be explained below using the first heat insulation sheet 120a as an example. With reference to FIG. 8, an example structure of the first heat insulation sheet 120a will be described. As shown in FIG. 8, in this example embodiment, the first heat insulation sheet 120a comprises a polymer substrate 122 and two metal plating layers 124 respectively plated on a front side and a back side of the polymer substrate 122. In other words, the first heat insulation sheet 120a is double-sided metal-plated. In some variations of the this example embodiment, the first heat insulation sheet 120a may comprise a polymer substrate and a single metal plating layer plated on the front side or the back side of the polymer substrate, in other words, the first heat insulation sheet may be single-sided metal-plated.

Optionally, the first heat insulation sheet and the second heat insulation sheet may have the same structure, and in this case, both the first heat insulation sheet and the second heat insulation sheet may be double-sided metal-plated. Alternately, both the first heat insulation sheet and the second heat insulation sheet may be single-sided metal-plated. Alternately, the first heat insulation sheet and the second heat insulation sheet may have different structures. For example, one of the first heat insulation sheet and the second heat insulation sheet may be double-sided metal-plated, and the other of the first heat insulation sheet and the second heat insulation sheet may be single-sided metal-plated. As another example, both the first heat insulation sheet and the second heat insulation sheet may both be single-sided metal-plated, but metal plating layers of the first heat insulation sheet and the second heat insulation sheet may be plated on the surface, facing the outer layer/inner layer of the respective polymer substrate.

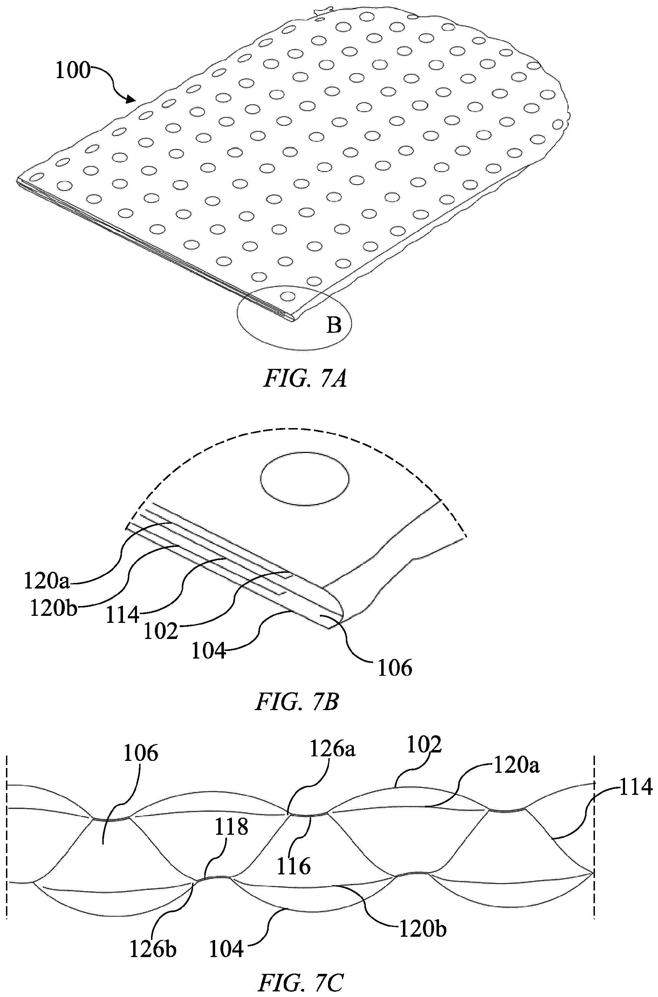

The first heat insulation sheet 120a is arranged within the inflatable chamber 106 between the top sheet 102 and the connecting sheet 114, and the second heat insulation sheet 120b is arranged within the inflatable chamber 106 between the connecting sheet 114 and the bottom sheet 104. The first heat insulation sheet 120a and the second heat insulation sheet 120b may have substantially the same shape and size as that of the connecting sheet 114. In an illustrated embodiment (see figures 6, 7b and 7c), one first heat insulation sheet 120a is arranged between the top sheet 102 and the connecting sheet 114, and one second heat insulation sheet 120b is arranged between the connecting sheet 114 and the bottom sheet 104. It should be understood that, in some variations, two or more first heat insulation sheets 120a may be arranged between the top sheet 102 and the connecting sheet 114, and two or more second heat insulation sheets 120b may also be arranged between the connecting sheet 114 and the bottom sheet 104.

In order to facilitate the welding between the top sheet 102 and the connecting sheet 114, the first heat insulation sheet 120a comprises a plurality of first openings 126a, each of the plurality of first openings 126a being configured to allow a corresponding one of the plurality of first welding regions 116 of the connecting sheet 114 to be in contact with and welded to the top sheet 102. In order to facilitate the welding between the connecting sheet 114 and the bottom sheet 104, the second heat insulation sheet 120b comprises a plurality of second openings 126b, each of the plurality of second openings 126b being configured to allow a corresponding one of the plurality of second welding regions 118 of the connecting sheet 114 to be in contact with and welded to the bottom sheet 104. In this way, a plurality of first welding regions 116 of the connecting sheet 114 may be in contact with and welded to the top sheet 102 through the plurality of first openings 126a, and a plurality of second welding regions 118 of the connecting sheet 114 may be in contact with and welded to the bottom sheet 104 through the plurality of second openings 126b.

During mass production of the inflatable pad 100, a plurality of first heat insulation sheets 120a can be stacked together and laser-cut to form the plurality of first openings 126a, and a plurality of second heat insulation sheets 120b can be stacked together and laser-cut to form the plurality of second openings 126b. If the polymer substrate of each of the first heat insulation sheet 120a and the second heat insulation sheet 120b is double-sided metal-plated (in other words, neither side of the polymer substrate is exposed outside), in the process of perforating through laser cutting, it is less likely for edges of the first openings 126a of the first heat insulation sheets 120a and edges of the second openings 126b of the second heat insulation sheets 120b to become stuck together. Subsequently, it is easy to separate the plurality of first heat insulation sheets 120a and the plurality of second heat insulation sheets 120b, thereby avoiding tearing or damaging of the first openings 126a and the second openings 126b during separation, and improving the production efficiency and yield of the inflatable pad.

In order to evaluate the heat insulation performance of an example inflatable pad, a thermal resistance value (R-value) of an inflatable pad according to an example embodiment and a thermal resistance value of a comparative inflatable pad were determined in accordance with the ASTM F3340-18 standard. The inflatable pad according to the example embodiment comprises a top sheet, a bottom sheet, a connecting sheet and two heat insulation sheets (i.e., a first heat insulation sheet and a second heat insulation sheet), the top sheet and the bottom sheet each comprise an outer layer and an inner layer, and each heat insulation sheet comprises a PET substrate and aluminum-plated layers plated on a front side and a back side of the PET substrate. The comparative inflatable pad has a structure similar to that of the inflatable pad of the example embodiment, and the difference therebetween mainly lies in that the comparative inflatable pad uses two PET single-sided aluminum-plated films to replace two heat insulation sheets. The test results indicate that the R-value of the inflatable pad according to the example embodiment is about 7.3 ft²·°F·h/Btu, while the R-value of the comparative inflatable pad is about 4.7 ft²·°F·h/Btu. Therefore, it can be seen that compared with a single-sided aluminum-plated film, a double-sided aluminum-plated heat insulation sheet can improve the thermal resistance value of the inflatable pad, resulting in a better heat insulation effect of the inflatable pad.

From another perspective, in order to enable the inflatable pad to have the same heat insulation effect, compared with the single-sided aluminum-plated film, a smaller number of double-sided aluminum-plated heat insulation sheets can be used. For example, assuming that a certain thermal resistance value/heat insulation effect is desired, 2 to 3 layers of single-sided aluminum-plated films would be arranged in the inflatable pad. However, if a double-sided aluminum-plated heat insulation sheet is provided, only 1 to 2 layers would be needed to achieve a similar thermal resistance value/heat insulation effect. This can reduce the production cost of the inflatable pad and make it more lightweight.

Moreover, for an inflatable pad with an aluminum-plated film, when the user turns over from side to side while sleeping on the inflatable pad, the aluminum-plated film may be subjected to stress, bending, and friction with the surroundings, resulting in noise. If a large number of aluminum-plated films are used, the movement or turning of the user may generate significant noise, which may affect rest. For an inflatable pad according to an example embodiment, since a smaller number of heat insulation sheets can be used to achieve the same heat insulation effect, the noise generated when the user moves or turns can also be reduced, thereby improving the user's resting comfort.

Thus, the inflatable pad comprising the heat insulation sheet according to an example embodiment may facilitates mass production, may have a good heat insulation performance, and may also reduce the noise created when a user turns over, thereby improving comfort during use.

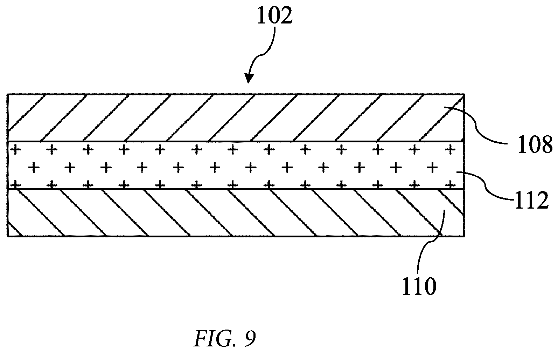

In some variations of the above-described example embodiment, with reference to FIG. 9, one or both of the top sheet 102 and the bottom sheet 104 may have a multi-layer composite structure comprising a heat insulation film 112. The top sheet 102 and the bottom sheet 104 may have the same multi-layer composite structure. For the sake of simplicity, the top sheet 102 will be used and shown in figure 9 as an example to explain the structure of both the top sheet 102 and the bottom sheet 104. As shown in FIG. 9, the top sheet 102 may comprise an outer layer 108 away from the inflatable chamber 106, an inner layer 110 facing the inflatable chamber 106, and a heat insulation film 112 sandwiched between the outer layer 108 and the inner layer 110. The outer layer 108 may be a fabric layer to provide a comfortable touch. The outer layer 108 may be a non-flocked fabric layer or a flocked fabric layer. The inner layer 110 may be a polymer material layer, and can be made of TPU, PVC, PU, or other suitable polymer materials. The heat insulation film 112 may comprise a polymer substrate and at least one metal plating layer plated on at least one of a front side and a back side of the polymer substrate. In other words, the heat insulation film 112 may be single-sided metal-plated or double-sided metal-plated. If the heat insulation film is a polymer substrate with single-sided metal plating, the metal plating layer may be chosen to face either the outer layer or the inner layer. The polymer substrate of the heat insulation film 112 may be made of suitable polymer materials, such as PVC, PP, PET, etc. The metal plating layer of the heat insulation film 112 may be made of suitable metal materials such as aluminum, zinc, copper, silver, or gold. Further optionally, the polymer substrate of the heat insulation film 112 may be made of PET, and the metal plating layer of the heat insulation film 112 may be made of aluminum. In some example implementations, the single metal plating layer of the heat insulation film may have a thickness of 100 angstroms to 800 angstroms, for example, 335 angstroms. In some example implementations, the polymer substrate of the heat insulation film may have a thickness of 5 micrometers to 50 micrometers, for example, 20 micrometers. In some example implementations, the heat insulation film may have a thickness of 5 micrometers to 50 micrometers, for example, 20 micrometers. The heat insulation film 112 may be bonded to the outer layer 108 and the inner layer 110 with an adhesive to form a multi-layer composite structure. The top sheet 102 comprising the heat insulation film and the bottom sheet 104 comprising the heat insulation film may aid in improving the heat insulation performance of the inflatable pad 100.

It should be understood that, in some example aspects of this example embodiment, the top sheet and the bottom sheet of the inflatable pad may also have different structures. For example, the top sheet may have an outer layer 108, an inner layer 110 and a heat insulation film 112, while the bottom sheet only may have only an outer layer 108 and an inner layer 110. Alternately, the bottom sheet may have an outer layer 108, an inner layer 110 and a heat insulation film 112, while the top sheet may have only an outer layer 108 and an inner layer 110.

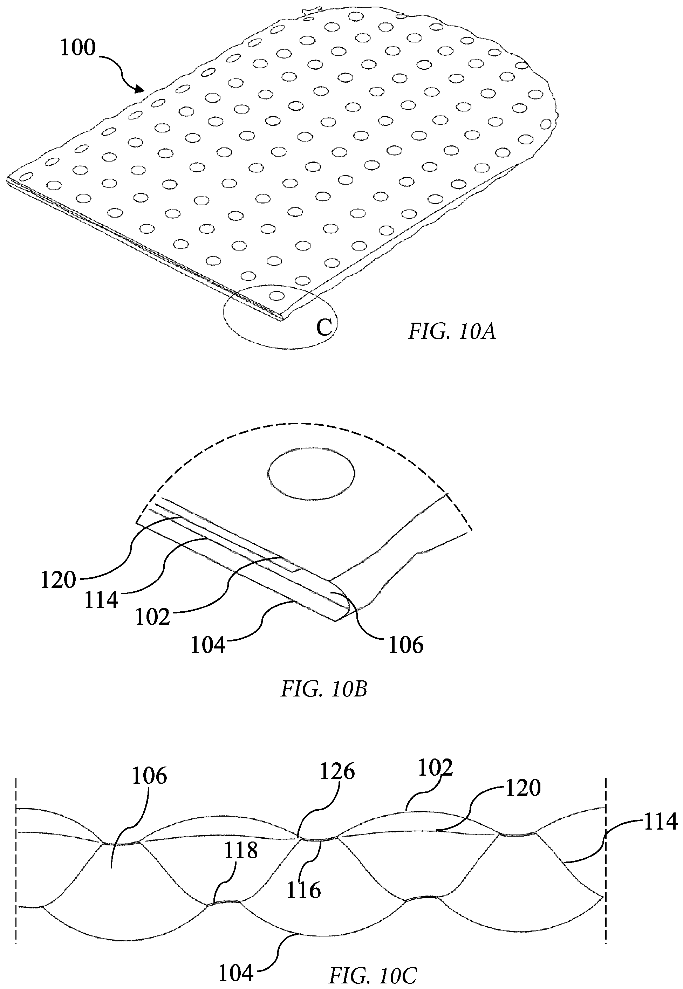

FIG. 10A to FIG. 10C show an inflatable pad 100 and components thereof according to a third example embodiment. The inflatable pad according to the third example embodiment is similar to the inflatable pad according to the second example embodiment, and the differences therebetween merely lie in that the inflatable pad 100 according to the third example embodiment only arranges one or more heat insulation sheets 120 between the top sheet 102 and the connecting sheet 114. The differences between the second and third example embodiments will be introduced below.

With reference to FIG. 10A to FIG. 10C, the inflatable pad 100 according to the third example embodiment comprises a top sheet 102 and a bottom sheet 104. The periphery of the top sheet 102 is connected to the periphery of the bottom sheet 104, such that the top sheet 102 and the bottom sheet 104 jointly define an inflatable chamber 106 therebetween. Optionally, the top sheet 102 and the bottom sheet 104 may have the same shape and size. At least one of the top sheet 102 and the bottom sheet 104 comprises an outer layer 108 facing away from the inflatable chamber 106 and an inner layer 110 facing the inflatable chamber 106. The outer layer may be a fabric layer to provide a comfortable touch. The outer layer may be a non-flocked fabric layer or a flocked fabric layer. The inner layer may be a polymer material layer, and can be made of TPU, PVC, PU or other suitable polymer materials.

A heat insulation film 112 is sandwiched between the outer layer 108 and the inner layer 110, wherein the heat insulation film112 comprises a polymer substrate and at least one metal plating layer plated on at least one of a front side and a back side of the polymer substrate. The outer layer may be a fabric layer to provide a comfortable touch. The outer layer may be a non-flocked fabric layer or a flocked fabric layer. The inner layer may be a polymer material layer, and can be made of TPU, PVC, PU, or other suitable polymer materials. The polymer substrate of the heat insulation film may be made of suitable polymer materials, such as PVC, PP, PET, etc. The metal plating layer of the heat insulation film may be made of suitable metal materials such as aluminum, zinc, copper, silver, or gold. The heat insulation film may be bonded to the outer layer and the inner layer with an adhesive to form a multi-layer composite structure.

Optionally, the top sheet 102 and the bottom sheet 104 of the inflatable pad 100 may have the same structure. In this case, each of the top sheet 102 and the bottom sheet 104 may comprise an outer layer, an inner layer and a single-sided metal-plated heat insulation film. Alternately, each of the top sheet 102 and the bottom sheet 104 may comprise an outer layer, an inner layer, and a double-sided metal-plated heat insulation film. Optionally, the top sheet 102 and the bottom sheet 104 of the inflatable pad 100 may also have different structures. In this case, one of the top sheet 102 and the bottom sheet 104 comprises an outer layer, an inner layer and a single-sided metal-plated or double-sided metal-plated heat insulation film, and the other of the top sheet 102 and the bottom sheet 104 may comprise only an outer layer and an inner layer. Alternately, the top sheet 102 and the bottom sheet 104 may each comprise an outer layer, an inner layer and a single-sided metal-plated or double-sided metal-plated heat insulation film. As an example, one of the top sheet 102 and the bottom sheet 104 may comprise a single-sided metal-plated heat insulation film, while the other of the top sheet 102 and the bottom sheet 104 may comprise a double-sided metal-plated heat insulation film. As another example, the top sheet 102 and the bottom sheet 104 may each comprise a single-sided metal-plated heat insulation film, but the metal plating layers of the heat insulation films of the top sheet 102 and the bottom sheet 104 may be plated on different surfaces of the polymer substrate.

The inflatable pad 100, according to the third example embodiment further comprises a connecting sheet 114. The connecting sheet 114 is arranged within the inflatable chamber 106 between the top sheet 102 and the bottom sheet 104. The connecting sheet 114 comprises a plurality of first welding regions 116 and a plurality of second welding regions 118, wherein the plurality of first welding regions 116 and the plurality of second welding regions 118 are staggered with respect to each other, the plurality of first welding regions 116 are welded to the inner layer of the top sheet 102, and the plurality of second welding regions 118 are welded to the inner layer of the bottom sheet 104.

The inflatable pad 100, according to this third example embodiment, further comprises a heat insulation sheet 120. The heat insulation sheet 120 comprises a polymer substrate and at least one metal plating layer plated on at least one of a front side and a back side of the polymer substrate. Alternatively, also a plurality of metal plating layers may be present. The heat insulation sheet 120 is arranged, within the inflatable chamber 106, between the top sheet 102 and the connecting sheet 114. In the illustrated example embodiment, the single heat insulation sheet 120 is arranged between the top sheet 102 and the connecting sheet 114. It should be understood that, alternately, two or more heat insulation sheets may also be arranged between the top sheet and the connecting sheet.

In order to facilitate the welding between the top sheet 102 and the connecting sheet 114, the heat insulation sheet 120 comprises a plurality of openings 126, each opening 126 being configured to allow a corresponding first welding region 116 of the connecting sheet 114 to be in contact with and welded to the top sheet 102. In this way, a plurality of first welding regions 116 of the connecting sheet 114 may be in contact with and welded to the top sheet 102 through the plurality of openings 126, and a plurality of second welding regions 118 of the connecting sheet 114 may be in direct contact with and welded to the bottom sheet 104.

In some variations of the third example embodiment, the inflatable pad may alternately include only one or more heat insulation sheets 120 between the bottom sheet and the connecting sheet, and the heat insulation sheet comprises a plurality of openings 126, each opening being configured to allow a corresponding second welding region of the connecting sheet to be in contact with and welded to the bottom sheet. In this way, the plurality of first welding regions of the connecting sheet may be in direct contact with and welded to the top sheet, and the plurality of second welding regions of the connecting sheet may be in contact with and welded to the bottom sheet through the plurality of openings 126.

In some variations of the third example embodiment, the top sheet and the bottom sheet of the inflatable pad may have the same multi-layer composite structure. Each of the top sheet and the bottom sheet may comprise an outer layer facing away from the inflatable chamber, an inner layer facing the inflatable chamber, and a heat insulation film sandwiched between the outer layer and the inner layer. The heat insulation film comprises a polymer substrate and at least one metal plating layer plated on at least one of a front side and a back side of the polymer substrate. If the heat insulation film is a polymer substrate with single-sided metal plating, the metal plating layer can be chosen to face either the outer layer or the inner layer. The top sheet comprising the heat insulation film and the bottom sheet comprising the heat insulation film can improve the heat insulation performance of the inflatable pad. It should be understood that, in some other variations, the top sheet and the bottom sheet of the inflatable pad may have different structures. For example, the top sheet may have an outer layer, an inner layer and a heat insulation film, while the bottom sheet may have only an outer layer and an inner layer; alternatively, the bottom sheet may have an outer layer, an inner layer and a heat insulation film, while the top sheet may have only an outer layer and an inner layer.

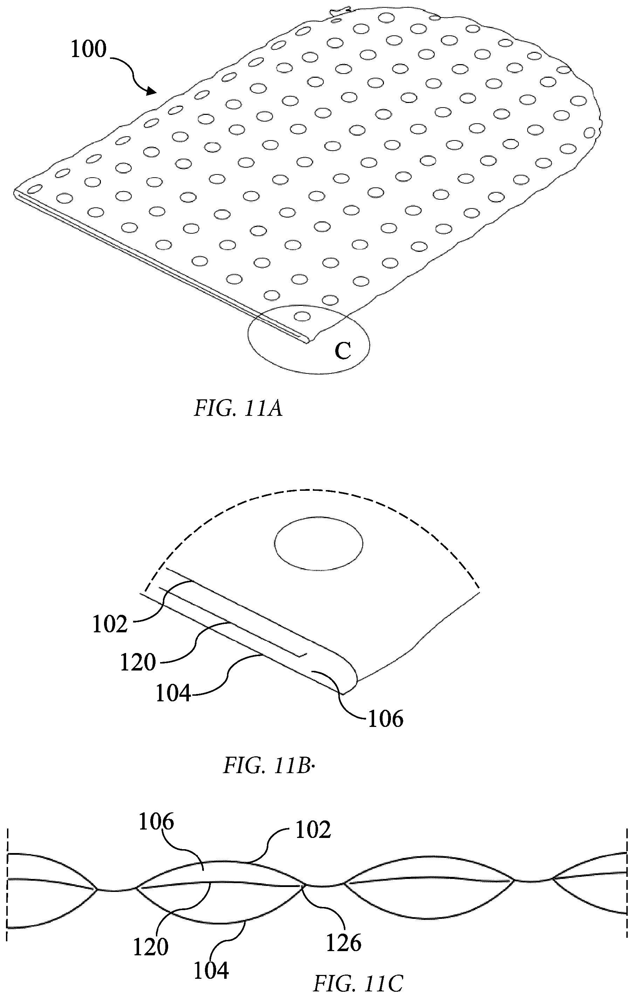

FIG. 11A to FIG. 11C show an inflatable pad 100 and components thereof according to a fourth example embodiment. The inflatable pad according to the fourth example embodiment is similar to the inflatable pad according to the second and third example embodiments, and the main differences therebetween lie in that the inflatable pad according to the fourth example embodiment is not provided with a connecting sheet. The differences among the example embodiments will be introduced below.

With reference to FIG. 11A through FIG. 11C, the inflatable pad 100 according to the fourth example embodiment comprises a top sheet 102 and a bottom sheet 104. The periphery of the top sheet 102 is connected to the periphery of the bottom sheet 104, such that the top sheet 102 and the bottom sheet 104 jointly define an inflatable chamber 106 therebetween. One or both of top sheet 102 and the bottom sheet 104 may comprise an outer layer facing away from the inflatable chamber 106 and an inner layer facing the inflatable chamber 106. The outer layer may be a fabric layer to provide a comfortable touch. The outer layer may be a non-flocked fabric layer or a flocked fabric layer. The inner layer is a polymer material layer, and can be made of TPU, PVC, PU, or other suitable polymer materials.

As shown, the inflatable pad 100 further comprises a heat insulation sheet 120. Optionally, the heat insulation sheet 120 comprises a polymer substrate and at least one metal plating layer plated on a front side and a back side of the polymer substrate. Preferably, a plurality of metal plating layers are present. The heat insulation sheet 120 is arranged within the inflatable chamber 106 between the top sheet 102 and the bottom sheet 104. As shown, one heat insulation sheet 120 is arranged between the top sheet 102 and the bottom sheet 104. It should be understood that, in some variations of the fourth example embodiment, two or more heat insulation sheets may be arranged between the top sheet and the bottom sheet. In some example variations, the heat insulation sheet 120 comprises a polymer substrate and a metal plating layer on one of the front side and the back side of the polymer substrate.

In order to facilitate the welding between the top sheet 102 and the bottom sheet 104, the heat insulation sheet 120 comprises a plurality of openings 126, such that the top sheet 102 can be in contact with and welded to the bottom sheet 104 via the plurality of openings 126.

Optionally, one or both of the top sheet 102 and the bottom sheet 104 further comprises a heat insulation film sandwiched between the outer layer and the inner layer. The structure and materials of the heat insulation film may be the same as in the above-described example embodiments. According to an example variation, the top sheet and the bottom sheet of the inflatable pad may have the same multi-layer composite structure. Each of the top sheet and the bottom sheet may comprise an outer layer facing away from the inflatable chamber, an inner layer facing the inflatable chamber, and a heat insulation film sandwiched between the outer layer and the inner layer. The heat insulation film comprises a polymer substrate and a metal plating layer plated on at least one of a front side and a back side of the polymer substrate. If the heat insulation film is a polymer substrate with single-sided metal plating, the metal plating layer can be chosen to face either the outer layer or the inner layer. The top sheet comprising the heat insulation film and the bottom sheet comprising the heat insulation film can improve the heat insulation performance of the inflatable pad. It should be understood that, in some other example variations, the top sheet and the bottom sheet of the inflatable pad may have different structures. For example, the top sheet has an outer layer, an inner layer and a heat insulation film, while the bottom sheet may have only an outer layer and an inner layer. Alternately, the bottom sheet has an outer layer, an inner layer and a heat insulation film, while the top sheet may have only an outer layer and an inner layer.

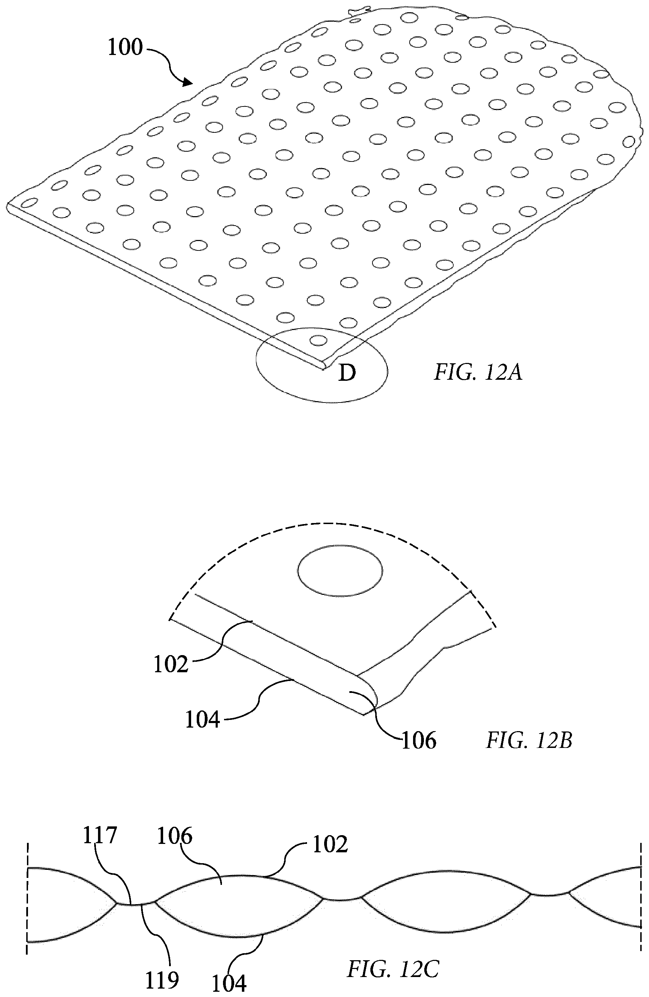

FIG. 12A to FIG. 12C show an inflatable pad and components thereof according to a fifth example embodiment. The inflatable pad according to the fifth embodiment is similar to the inflatable pad according to the first example embodiment, and the differences therebetween lie in that the inflatable pad according to the fifth example embodiment is not provided with a connecting sheet. The main differences among the embodiments will be introduced below.

With reference to FIG. 12A to FIG. 12C, the inflatable pad 100 according to the fifth example embodiment comprises a top sheet 102 and a bottom sheet 104, the top sheet 102 and the bottom sheet 104 being connected to each other and jointly defining an inflatable chamber 106 therebetween. At least one of the top sheet 102 and the bottom sheet 104 comprises an outer layer facing away from the inflatable chamber 106, an inner layer facing the inflatable chamber 106, and a heat insulation film sandwiched between the outer layer and the inner layer, wherein the heat insulation film comprises a polymer substrate and a metal plating layer plated on at least one of a front side and a back side of the polymer substrate. The outer layer is a fabric layer to provide a comfortable touch (the outer layer may also be referred to as a comfort layer). The outer layer may be a non-flocked fabric layer or a flocked fabric layer. The inner layer is a polymer material layer, and can be made of TPU, PVC, PU, or other suitable polymer materials. The polymer substrate of the heat insulation film may be made of suitable polymer materials, such as PVC, PP, PET, etc. The metal plating layer of the heat insulation film may be made of suitable metal materials such as aluminum, zinc, copper, silver, or gold. The heat insulation film may be bonded to the outer layer and the inner layer with an adhesive to form a multi-layer composite structure.

Optionally, the top sheet 102 and the bottom sheet 104 of the inflatable pad 100 may have the same structure. In this case, each of the top sheet 102 and the bottom sheet 104 comprises an outer layer, an inner layer and a single-sided metal-plated or double-sided metal-plated heat insulation film. Optionally, the top sheet 102 and the bottom sheet 104 of the inflatable pad 100 may also have different structures. In this case, one of the top sheet 102 and the bottom sheet 104 comprises an outer layer, an inner layer and a single-sided metal-plated or double-sided metal-plated heat insulation film, and the other of the top sheet 102 and the bottom sheet 104 may only comprise an outer layer and an inner layer. Alternately, the top sheet 102 and the bottom sheet 104 may each comprise an outer layer, an inner layer and a single-sided metal-plated or double-sided metal-plated heat insulation film. As an example, one of the top sheet 102 and the bottom sheet 104 may comprise a single-sided metal-plated heat insulation film, while the other of the top sheet 102 and the bottom sheet 104 may comprise a double-sided metal-plated heat insulation film. As another example, the top sheet 102 and the bottom sheet 104 may each comprise a single-sided metal-plated heat insulation film, but the metal plating layers of the heat insulation films of the top sheet 102 and the bottom sheet 104 may be plated on different surfaces of the polymer substrate.

With reference to FIG. 12C, the top sheet 102 comprises a plurality of third welding regions 117, and the bottom sheet 104 comprises a plurality of fourth welding regions 119, wherein each third welding region 117 is directly welded to the corresponding fourth welding region 119, so that the top sheet 102 and the bottom sheet 104 are welded to each other at a plurality of positions. The plurality of third welding regions 117 may be evenly distributed on the top sheet 102, and the plurality of fourth welding regions 119 may be evenly distributed on the bottom sheet 104, to help enable the inflatable pad 100 to maintain its flatness when fully inflated. As illustrated, the plurality of third welding regions 117 may be evenly distributed on the top sheet 102 in an array, and the plurality of fourth welding regions 119 may be evenly distributed on the bottom sheet 104 in an array.

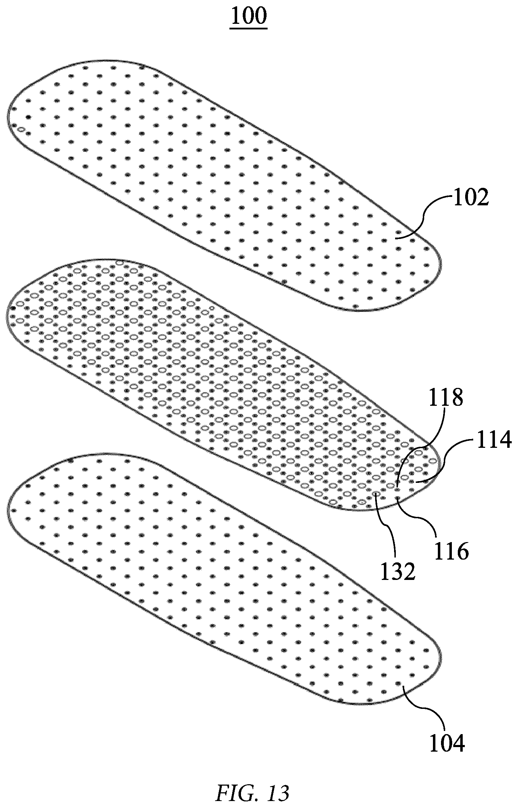

FIG. 13 shows an exploded view of an inflatable pad 100 according to a sixth example embodiment of the present invention. The inflatable pad according to the sixth embodiment is similar to the inflatable pad according to the first embodiment, and the differences therebetween merely lie in that the connecting sheet 114 of the inflatable pad 100 according to the sixth embodiment is further provided with a plurality of lightening holes 132. The plurality of lightening holes 132 of the connecting sheet 114 are staggered from the plurality of first welding regions 116 and the plurality of second welding regions 118 of the connecting sheet 114, to avoid affecting the welding between the connecting sheet 114 and the top sheet 102 and the bottom sheet 104. By means of arranging the lightening holes 132, the weight of the connecting sheet 114 can be reduced, thereby making the inflatable pad 100 more lightweight. In an illustrated embodiment, the plurality of lightening holes 132 are evenly distributed on the connecting sheet 114 in an array. It should be understood that, the plurality of lightening holes 132 according to the sixth embodiment may be arranged in the connecting sheet of other embodiments in the same way.

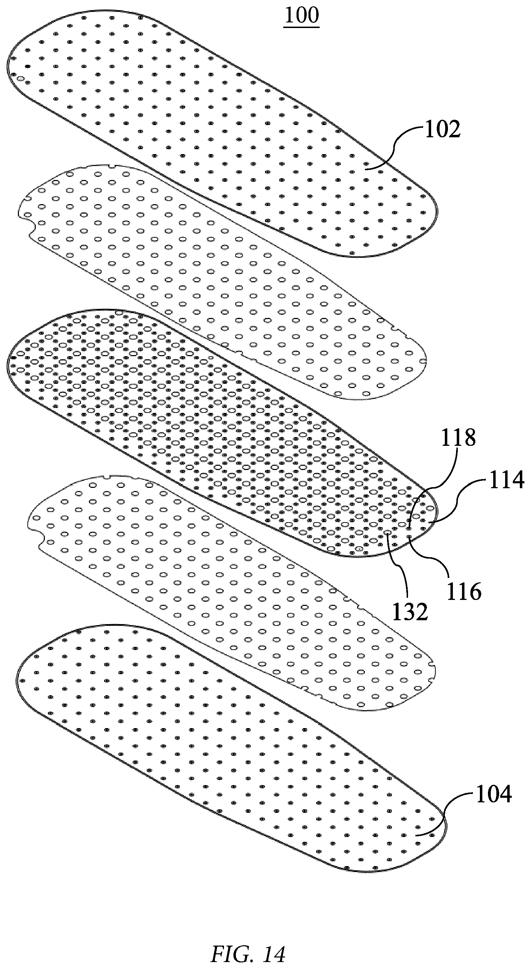

FIG. 14 shows an exploded view of an inflatable pad 100 according to a seventh example embodiment. The inflatable pad according to the seventh example embodiment is similar to the inflatable pad according to the second example embodiment, and the differences there among lie in that the connecting sheet 114 of the inflatable pad 100 according to the seventh example embodiment is further provided with a plurality of lightening holes 132. The plurality of lightening holes 132 of the connecting sheet 114 are staggered with respect to the plurality of first welding regions 116 and the plurality of second welding regions 118 of the connecting sheet 114, to avoid affecting the welding between the connecting sheet 114 and the top sheet 102 and the bottom sheet 104. By means of the presence of the lightening holes 132, the weight of the connecting sheet 114 can be reduced, thereby making the inflatable pad 100 more lightweight. As shown, the plurality of lightening holes 132 may be evenly distributed on the connecting sheet 114 in an array. It should be understood that, the plurality of lightening holes 132 may be arranged in the connecting sheet of other example embodiments in the same way.

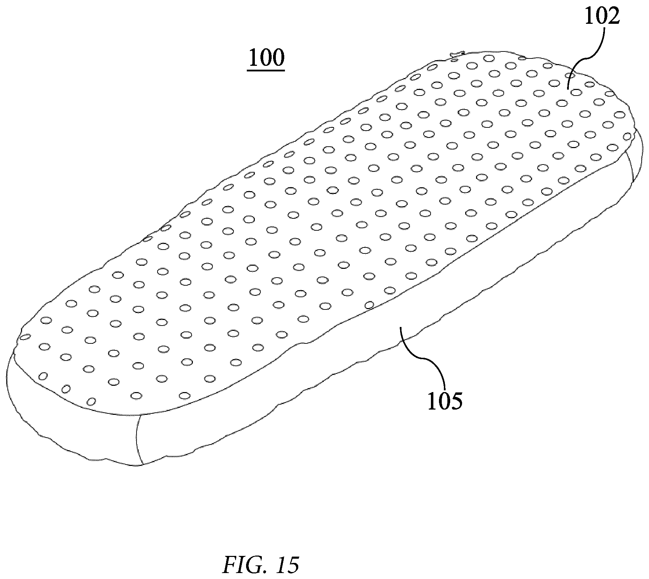

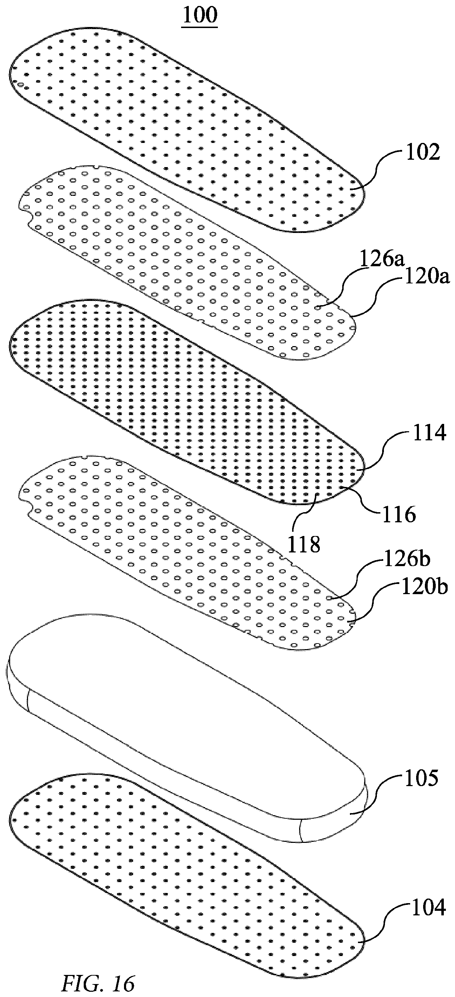

FIG. 15 and FIG. 16 show an inflatable pad according to an eighth example embodiment. The inflatable pad according to the eighth example embodiment is similar to the inflatable pad according to the above-described second example embodiment, and the main differences there among lie in that the inflatable pad according to the eighth example embodiment further comprises a lateral confining sheet 105. The main differences among the example embodiments will be introduced below.

With reference to FIG. 15 and FIG. 16, the inflatable pad 100 comprises a top sheet 102, a bottom sheet 104, and a lateral confining sheet 105. The periphery of the top sheet 102 is connected to the periphery of the bottom sheet 104 by means of a lateral confining sheet 105, so that the top sheet 102, the bottom sheet 104 and the lateral confining sheet 105 jointly define an inflatable chamber 106, therebetween. As shown, the periphery of the top sheet 102 is connected, preferably welded, to a top edge of the lateral confining sheet 105, and the periphery of the bottom sheet 104 is connected, preferably welded, to a bottom edge of the lateral confining sheet 105. It should be understood that, the lateral confining sheet 105 may be arranged, in all of the other above described example embodiments, in the same way.

The top sheet 102 is configured for the user to sit or lie on, and the bottom sheet 104 is configured to be in contact with the ground. The top sheet 102 and the bottom sheet 104 may each comprise an outer layer facing away from the inflatable chamber and an inner layer facing the inflatable chamber. The outer layer may be a fabric layer to provide a comfortable touch. The outer layer may be a non-flocked fabric layer or a flocked fabric layer. The inner layer is a polymer material layer, and can be made of TPU, PVC, PU or other suitable polymer materials. In some variations of the eighth example embodiment, in addition to the outer layer and the inner layer, at least one of the top sheet and the bottom sheet may further comprise a heat insulation film sandwiched between the outer layer and the inner layer, the heat insulation film comprising a polymer substrate and a metal plating layer plated on at least one of a front side and a back side of the polymer substrate. The polymer substrate of the heat insulation film may be made of suitable polymer materials, such as PVC, PP, PET, etc. The metal plating layer of the heat insulation film may be made of suitable metal materials such as aluminum, zinc, copper, silver, or gold. If the heat insulation film is a polymer substrate with single-sided metal plating, the metal plating layer can be chosen to face either the outer layer or the inner layer. The heat insulation film may be bonded to the outer layer and the inner layer with an adhesive to form a multi-layer composite structure.

Optionally, the top sheet 102 and the bottom sheet 104 of the inflatable pad 100 may have the same structure. In this case, each of the top sheet 102 and the bottom sheet 104 comprises an outer layer, an inner layer and a single-sided metal-plated heat insulation film; alternatively, each of the top sheet 102 and the bottom sheet 104 comprises an outer layer, an inner layer and a double-sided metal-plated heat insulation film. Optionally, the top sheet 102 and the bottom sheet 104 of the inflatable pad 100 may also have different structures. In this case, one of the top sheet 102 and the bottom sheet 104 comprises an outer layer, an inner layer and a single-sided metal-plated or double-sided metal-plated heat insulation film, and the other of the top sheet 102 and the bottom sheet 104 may only comprise an outer layer and an inner layer; alternatively, the top sheet 102 and the bottom sheet 104 may each comprise an outer layer, an inner layer and a single-sided metal-plated or double-sided metal-plated heat insulation film. As an example, one of the top sheet 102 and the bottom sheet 104 comprises a single-sided metal-plated heat insulation film, while the other of the top sheet 102 and the bottom sheet 104 comprises a double-sided metal-plated heat insulation film. As another example, the top sheet 102 and the bottom sheet 104 each comprise a single-sided metal-plated heat insulation film, but the metal plating layers of the heat insulation films of the top sheet 102 and the bottom sheet 104 are plated on different surfaces of the polymer substrate.

With continued reference to FIG. 16, the inflatable pad 100 further comprises a connecting sheet 114. The connecting sheet 114 is arranged within the inflatable chamber between the top sheet 102 and the bottom sheet 104. The connecting sheet 114 may be made of TPU, PVC, PU or other suitable polymer materials. The connecting sheet 114 comprises a plurality of first welding regions 116 and a plurality of second welding regions 118, wherein the plurality of first welding regions 116 and the plurality of second welding regions 118 are staggered with respect to each other, the plurality of first welding regions 116 are welded to the inner layer of the top sheet 102, and the plurality of second welding regions 118 are welded to the inner layer of the bottom sheet 104.

The inflatable pad 100 further comprises heat insulation sheets including a first heat insulation sheet 120a and a second heat insulation sheet 120b. The first heat insulation sheet 120a and the second heat insulation sheet 120b each comprise a polymer substrate and two metal plating layers respectively plated on a front side and a back side of the polymer substrate. The polymer substrate of the heat insulation sheet may be made of suitable polymer materials, such as PVC, PP, PET, etc. The metal plating layer of the heat insulation sheet may be made of suitable metal materials such as aluminum, zinc, copper, silver, or gold. In some variations, the first heat insulation sheet 120a and/or the second heat insulation sheet 102b may comprise a polymer substrate and only one metal plating layer respectively plated on a front side or a back side of the polymer substrate.

The first heat insulation sheet 120a is arranged within the inflatable chamber between the top sheet 102, and the connecting sheet 114, and the second heat insulation sheet 120b is arranged within the inflatable chamber between the connecting sheet 114 and the bottom sheet 104. The first heat insulation sheet 120a comprises a plurality of first openings 126a, each first opening 126a being configured to allow a corresponding first welding region 116 of the connecting sheet 114 to be in contact with and welded to the top sheet 102. The second heat insulation sheet 120b comprises a plurality of second openings 126b, each second opening 126b being configured to allow a corresponding second welding region 118 of the connecting sheet 114 to be in contact with and welded to the bottom sheet 104. In this way, a plurality of first welding regions 116 of the connecting sheet 114 may be in contact with and welded to the top sheet 102 through the plurality of first openings 126a, and a plurality of second welding regions 118 of the connecting sheet 114 may be in contact with and welded to the bottom sheet 104 through the plurality of second openings 126b.

As shown, one first heat insulation sheet 120a is arranged between the top sheet 102 and the connecting sheet 114, and one second heat insulation sheet 120b is arranged between the connecting sheet 114 and the bottom sheet 104. It should be understood that, alternately, two or more first heat insulation sheets may also be arranged between the top sheet and the connecting sheet, and two or more second heat insulation sheets may also be arranged between the connecting sheet and the bottom sheet. It should also be understood that, alternately, the inflatable pad may include only one or more heat insulation sheets between the top sheet and the connecting sheet, the one or more heat insulation sheets comprising a plurality of openings, each opening being configured to allow a corresponding first welding region of the connecting sheet to be in contact with and welded to the top sheet. Still further, the inflatable pad may include only one or more heat insulation sheets between the bottom sheet and the connecting sheet, the heat insulation sheets comprising a plurality of openings, each opening being configured to allow a corresponding second welding region of the connecting sheet to be in contact with and welded to the bottom sheet.

It should also be understood that, the lateral confining sheet according to this example embodiment may also be arranged in other example embodiments in the same way.

Compared with an option of arranging a single-sided aluminum-plated film within an inflatable chamber, since the heat insulation film with the metal plating layer of the inflatable pad according to one or more example embodiments may be sandwiched between the outer layer and the inner layer of the top sheet and/or the outer layer and the inner layer of the bottom sheet, the metal plating layer of the heat insulation film does not hinder the welding between the top sheet and the bottom sheet and the connecting sheet or the direct welding between the top sheet and the bottom sheet, thus there is no requirement to perforate the heat insulation film. In other words, with an inflatable pad according to one or more example embodiments described herein, the heat insulation film with the metal plating layer may aid in improving the heat insulation performance of the inflatable pad, and the problem of a plurality of single-sided aluminum-plated films becoming stuck and difficult to be separated at the perforations due to a perforating operation may be prevented, thereby improving the production efficiency and yield of the inflatable pad.

As described herein, unless expressly stated or limited otherwise, the terms such as "mounting," "connecting," "connection," and "fixing" should be interpreted broadly, for example, either fixed or detachable connection, or integration; may be a direct connection or an indirect connection by means of an intermediate medium, and may be communication between the interiors of two elements or the interaction relationship of the two elements, unless otherwise expressly defined. For those of ordinary skill in the art, the specific meaning of the terms used herein should be construed according to specific circumstances.

It should also be understood that the components and features described herein can be made of any of a variety of materials including, but not limited to, polymer, rubber, metal, and other suitable materials well known to those skilled in the art or a combination thereof. The example embodiments shown in FIG. 2 through FIG. 16 only show the shapes, dimensions and arrangements of various optional components of an inflatable pad, which are merely illustrative but not limiting, and other shapes, dimensions and arrangements may be employed. Those skilled in the art can easily make modifications, variations, and equivalents of these example embodiments on the basis of the disclosed content. For example, the illustrated or described features as part of an example embodiment can be used with another example embodiment to provide a further example embodiment.

It should be understood that those skilled in the art can make variations and improvements to the concepts described above. The descriptions included herein are illustrative rather than restrictive.

It may be understood that the example embodiments described herein may be considered in a descriptive sense only and not for purposes of limitation. Descriptions of features or aspects within each example embodiment may be considered as available for other similar features or aspects in other example embodiments.

## Claims

1. An inflatable pad (100) comprising:
a top sheet (102) and a bottom sheet (104) connected to the top sheet (102), such that the top sheet (102) and the bottom sheet (104) jointly define an inflatable chamber (106) therebetween;
wherein at least one of the top sheet (102) and the bottom sheet (104) comprises:
an outer layer (108) comprising a fabric layer facing away from the inflatable chamber (106),
an inner layer (110) facing the inflatable chamber (106), the inner layer comprising a polymer material layer, and
a heat insulation film (112) disposed between the outer layer (108) and the inner layer (110), the heat insulation film (112) comprising a polymer substrate (123) and at least a metal plating layer (125) plated on at least one side of the polymer substrate (123).

2. The inflatable pad according to claim 1, further comprising:
at least one heat insulation sheet (120) disposed within the inflatable chamber (106),
wherein the heat insulation sheet (120) comprises a polymer substrate (122) and at least one metal plating layer (124) plated on the polymer substrate (122).

3. The inflatable pad according to claim 1 or 2, further comprising:
a connecting sheet (114) disposed within the inflatable chamber (106) between the top sheet (102) and the bottom sheet (104).

4. The inflatable pad according to claim 3, wherein the connecting sheet (114) comprises:
a plurality of first welding regions (116) and a plurality of second welding regions (118) staggered with respect to the plurality of first welding regions (116),
wherein the plurality of first welding regions (116) are welded to the top sheet (102) and the plurality of second welding regions (118) are welded to the bottom sheet (104).

5. The inflatable pad according to claim 2 or 3, wherein:
the at least one heat insulation sheet (120) comprises a first heat insulation sheet (120a) and a second heat insulation sheet (120b).

6. The inflatable pad according to claim 5:
wherein the first heat insulation sheet (120a) is disposed between the top sheet (102) and the connecting sheet (114) and comprises a plurality of first openings (126a), wherein each of the plurality first openings (126a) is configured to allow a corresponding one of the plurality of first welding regions (116) to be in contact with and welded to the top sheet (102).

7. The inflatable pad according to claim 5 or 6, wherein:
wherein the second heat insulation sheet (120b) is disposed between the connecting sheet (114) and the bottom sheet (104) and comprises a plurality of second openings (126b), wherein each of the plurality of second openings (126b) is configured to allow a corresponding one of the plurality of second welding regions (118) to be in contact with and welded to the bottom sheet (104).

8. The inflatable pad according to claim 1, wherein the outer layer (108) is a fabric layer, the inner layer (110) is a polymer material layer, and the heat insulation film (112) is bonded to the outer layer (108) and the inner layer (110).

9. The inflatable pad according to claim 1, wherein the metal plating layer (125) comprises a first metal plating layer plated on a front side of the polymer substrate and a second metal plating layer plated on a back side of the polymer substrate (123).

10. The inflatable pad according to claim 9, wherein:
the polymer substrate (123) is made of one of polyvinyl chloride, polypropylene, and polyethylene terephthalate; and
the metal plating layer (125) is made of one of aluminum, zinc, copper, silver, and gold.

11. The inflatable pad according to claim 1, further comprising:
a lateral confining sheet (105);
wherein a periphery of the top sheet (102) is connected to a top edge of the lateral confining sheet (105), and a periphery of the bottom sheet (104) is connected to a bottom edge of the lateral confining sheet (105), such that the bottom sheet (104) is connected to the top sheet (102) via the lateral confining sheet (105), and the top sheet (102), the bottom sheet (104), and the lateral confining sheet (105) jointly define the inflatable chamber (106) therebetween.

12. The inflatable pad according to claim 1, wherein the top sheet (102) and the bottom sheet (104) each comprise the outer layer (108) and the inner layer (110), and the inner layer (108) of the top sheet (102) and the inner layer of the bottom sheet (104) are made of the same polymer material.

13. The inflatable pad according to claim 3, wherein the top sheet (102) and the bottom sheet (104) each comprise the outer layer (108) and the inner layer (110), and the inner layer of the top sheet (102), the inner layer of the bottom sheet (104), and the connecting sheet (114) are made of the same polymer material.

14. The inflatable pad according to claim 3, wherein the connecting sheet (114) further comprises a plurality of lightening holes (132) which are staggered with respect to both the plurality of first welding regions (116) and the plurality of second welding regions (118).

15. The inflatable pad according to one of the preceding claims, wherein the metal plating layer (125) of the heat insulation film (112) has a thickness much smaller than that of the polymer substrate (125).

16. The inflatable pad according to one of the preceding claims, wherein the heat insulation film (112) has an overall thickness of 5 micrometers to 50 micrometers.

## Patentansprüche

1. Aufblasbare Matte (100), umfassend:
eine obere Folie (102) und eine mit der oberen Folie (102) verbundene untere Folie (104), sodass die obere Folie (102) und die untere Folie (104) gemeinsam eine aufblasbare Kammer (106) dazwischen definieren;
wobei mindestens entweder die obere Folie (102) oder die untere Folie (104) Folgendes umfasst:
eine äußere Schicht (108), die eine von der aufblasbaren Kammer (106) abgewandte Gewebeschicht umfasst,
eine der aufblasbaren Kammer (106) zugewandte innere Schicht (110), wobei die innere Schicht eine Polymermaterialschicht umfasst, und
eine Wärmedämmfolie (112), die zwischen der äußeren Schicht (108) und der inneren Schicht (110) angeordnet ist, wobei die Wärmedämmfolie (112) ein Polymersubstrat (123) und mindestens eine Metallbeschichtungsschicht (125) umfasst, die auf mindestens einer Seite des Polymersubstrats (123) aufgebracht ist.

2. Aufblasbare Matte nach Anspruch 1, ferner umfassend:
mindestens eine Wärmedämmfolie (120), die innerhalb der aufblasbaren Kammer (106) angeordnet ist,
wobei die Wärmedämmfolie (120) ein Polymersubstrat (122) und mindestens eine auf dem Polymersubstrat (122) aufgebrachte Metallbeschichtungsschicht (124) umfasst.

3. Aufblasbare Matte nach Anspruch 1 oder 2, ferner umfassend:
eine Verbindungsfolie (114), die innerhalb der aufblasbaren Kammer (106) zwischen der oberen Folie (102) und der unteren Folie (104) angeordnet ist.

4. Aufblasbare Matte nach Anspruch 3, wobei die Verbindungsfolie (114) Folgendes umfasst:
eine Vielzahl von ersten Schweißbereichen (116) und eine Vielzahl von zweiten Schweißbereichen (118), die gegenüber der Vielzahl von ersten Schweißbereichen (116) versetzt angeordnet sind,
wobei die Vielzahl von ersten Schweißbereichen (116) an die obere Folie (102) geschweißt ist und die Vielzahl von zweiten Schweißbereichen (118) an die untere Folie (104) geschweißt ist.

5. Aufblasbare Matte nach Anspruch 2 oder 3, wobei: die mindestens eine Wärmedämmfolie (120) eine erste Wärmedämmfolie (120a) und eine zweite Wärmedämmfolie (120b) umfasst.

6. Aufblasbare Matte nach Anspruch 5:
wobei die erste Wärmedämmfolie (120a) zwischen der oberen Folie (102) und der Verbindungsfolie (114) angeordnet ist und eine Vielzahl von ersten Öffnungen (126a) umfasst, wobei jede der Vielzahl von ersten Öffnungen (126a) so ausgebildet ist, dass sie es einem entsprechenden der Vielzahl von ersten Schweißbereichen (116) ermöglicht, mit der oberen Folie (102) in Kontakt zu kommen und daran geschweißt zu werden.

7. Aufblasbare Matte nach Anspruch 5 oder 6, wobei: wobei die zweite Wärmedämmfolie (120b) zwischen der Verbindungsfolie (114) und der unteren Folie (104) angeordnet ist und eine Vielzahl von zweiten Öffnungen (126b) umfasst, wobei jede der Vielzahl von zweiten Öffnungen (126b) so ausgebildet ist, dass sie es einem entsprechenden der Vielzahl von zweiten Schweißbereichen (118) ermöglicht, mit der unteren Folie (104) in Kontakt zu kommen und daran geschweißt zu werden.

8. Aufblasbare Matte nach Anspruch 1, wobei die äußere Schicht (108) eine Gewebeschicht ist, die innere Schicht (110) eine Polymermaterialschicht ist und die Wärmedämmfolie (112) mit der äußeren Schicht (108) und der inneren Schicht (110) verbunden ist.

9. Aufblasbare Matte nach Anspruch 1, wobei die Metallbeschichtungsschicht (125) eine erste Metallbeschichtungsschicht, die auf einer Vorderseite des Polymersubstrats aufgebracht ist, und eine zweite Metallbeschichtungsschicht umfasst, die auf einer Rückseite des Polymersubstrats (123) aufgebracht ist.

10. Aufblasbare Matte nach Anspruch 9, wobei:
das Polymersubstrat (123) aus einem von Polyvinylchlorid, Polypropylen und Polyethylenterephthalat besteht; und
die Metallbeschichtungsschicht (125) aus einem von Aluminium, Zink, Kupfer, Silber und Gold besteht.

11. Aufblasbare Matte nach Anspruch 1, ferner umfassend:
eine seitliche Begrenzungsfolie (105);
wobei ein Umfang der oberen Folie (102) mit einer oberen Kante der seitlichen Begrenzungsfolie (105) verbunden ist und ein Umfang der unteren Folie (104) mit einer unteren Kante der seitlichen Begrenzungsfolie (105) verbunden ist, sodass die untere Folie (104) über die seitliche Begrenzungsfolie (105) mit der oberen Folie (102) verbunden ist und die obere Folie (102), die untere Folie (104) und die seitliche Begrenzungsfolie (105) gemeinsam die aufblasbare Kammer (106) dazwischen definieren.

12. Aufblasbare Matte nach Anspruch 1, wobei die obere Folie (102) und die untere folie (104) jeweils die äußere Schicht (108) und die innere Schicht (110) umfassen und die innere Schicht (108) der oberen Folie (102) und die innere Schicht der unteren Folie (104) aus demselben Polymermaterial bestehen.

13. Aufblasbare Matte nach Anspruch 3, wobei die obere Folie (102) und die untere Folie (104) jeweils die äußere Schicht (108) und die innere Schicht (110) umfassen und die innere Schicht der oberen folie (102), die innere Schicht der unteren Folie (104) und die Verbindungsfolie (114) aus demselben Polymermaterial bestehen.

14. Aufblasbare Matte nach Anspruch 3, wobei die Verbindungsfolie (114) ferner eine Vielzahl von Erleichterungslöchern (132) umfasst, die sowohl gegenüber der Vielzahl von ersten Schweißbereichen (116) als auch der Vielzahl von zweiten Schweißbereichen (118) versetzt angeordnet sind.

15. Aufblasbare Matte nach einem der vorhergehenden Ansprüche, wobei die Metallbeschichtungsschicht (125) der Wärmedämmfolie (112) eine Dicke aufweist, die viel geringer ist als die des Polymersubstrats (125).

16. Aufblasbare Matte nach einem der vorhergehenden Ansprüche, wobei die Wärmedämmfolie (112) eine Gesamtdicke von 5 Mikrometern bis 50 Mikrometern aufweist.

## Revendications

1. Matelas gonflable (100) comprenant:
une feuille supérieure (102) et une feuille inférieure (104) reliée à la feuille supérieure (102), de sorte que la feuille supérieure (102) et la feuille inférieure (104) définissent conjointement une chambre gonflable (106) entre elles;
dans lequel au moins l'une des feuilles supérieure (102) et inférieure (104) comprend:
une couche externe (108) comprenant une couche de tissu orientée à l'opposé de la chambre gonflable (106),
une couche interne (110) orientée vers la chambre gonflable (106), la couche interne comprenant une couche de matériau polymère, et
un film d'isolation thermique (112) disposé entre la couche externe (108) et la couche interne (110), le film d'isolation thermique (112) comprenant un substrat polymère (123) et au moins une couche de placage métallique (125) plaquée sur au moins un côté du substrat polymère (123).

2. Matelas gonflable selon la revendication 1, comprenant en outre:
au moins une feuille d'isolation thermique (120) disposée à l'intérieur de la chambre gonflable (106), dans lequel la feuille d'isolation thermique (120) comprend un substrat polymère (122) et au moins une couche de placage métallique (124) plaquée sur le substrat polymère (122).

3. Matelas gonflable selon la revendication 1 ou 2, comprenant en outre:
une feuille de liaison (114) disposée à l'intérieur de la chambre gonflable (106) entre la feuille supérieure (102) et la feuille inférieure (104).

4. Matelas gonflable selon la revendication 3, dans lequel la feuille de liaison (114) comprend:
une pluralité de premières zones de soudage (116) et une pluralité de deuxièmes zones de soudage (118) décalées par rapport à la pluralité de premières zones de soudage (116),
dans lequel la pluralité de premières zones de soudage (116) sont soudées à la feuille supérieure (102) et la pluralité de deuxièmes zones de soudage (118) sont soudées à la feuille inférieure (104).

5. Matelas gonflable selon la revendication 2 ou 3, dans lequel:
ladite au moins une feuille d'isolation thermique (120) comprend une première feuille d'isolation thermique (120a) et une seconde feuille d'isolation thermique (120b).

6. Matelas gonflable selon la revendication 5:
dans lequel la première feuille d'isolation thermique (120a) est disposée entre la feuille supérieure (102) et la feuille de liaison (114) et comprend une pluralité de premières ouvertures (126a), dans lequel chacune de la pluralité de premières ouvertures (126a) est configurée pour permettre à l'une correspondante de la pluralité de premières zones de soudage (116) d'être en contact avec la feuille supérieure (102) et soudée à celle-ci.

7. Matelas gonflable selon la revendication 5 ou 6, dans lequel:
dans lequel la deuxième feuille d'isolation thermique (120b) est disposée entre la feuille de liaison (114) et la feuille inférieure (104) et comprend une pluralité de deuxièmes ouvertures (126b), dans lequel chacune de la pluralité de deuxièmes ouvertures (126b) est configurée pour permettre à l'une correspondante de la pluralité de deuxièmes zones de soudage (118) d'être en contact avec la feuille inférieure (104) et soudée à celle-ci.

8. Matelas gonflable selon la revendication 1, dans lequel la couche externe (108) est une couche de tissu, la couche interne (110) est une couche de matériau polymère, et le film d'isolation thermique (112) est lié à la couche externe (108) et à la couche interne (110).

9. Matelas gonflable selon la revendication 1, dans lequel la couche de placage métallique (125) comprend une première couche de placage métallique plaquée sur une face avant du substrat polymère et une deuxième couche de placage métallique plaquée sur une face arrière du substrat polymère (123).

10. Matelas gonflable selon la revendication 9, dans lequel:
le substrat polymère (123) est constitué de l'un parmi le chlorure de polyvinyle, le polypropylène et le polyéthylène téréphtalate; et
la couche de placage métallique (125) est constituée de l'un parmi l'aluminium, le zinc, le cuivre, l'argent et l'or.

11. Matelas gonflable selon la revendication 1, comprenant en outre:
une feuille de confinement latéral (105);
dans lequel une périphérie de la feuille supérieure (102) est reliée à un bord supérieur de la feuille de confinement latéral (105), et une périphérie de la feuille inférieure (104) est reliée à un bord inférieur de la feuille de confinement latéral (105), de sorte que la feuille inférieure (104) est reliée à la feuille supérieure (102) via la feuille de confinement latéral (105), et la feuille supérieure (102), la feuille inférieure (104) et la feuille de confinement latéral (105) définissent conjointement la chambre gonflable (106) entre elles.

12. Matelas gonflable selon la revendication 1, dans lequel la feuille supérieure (102) et la feuille inférieure (104) comprennent chacune la couche externe (108) et la couche interne (110), et la couche interne (108) de la feuille supérieure (102) et la couche interne de la feuille inférieure (104) sont constituées du même matériau polymère.

13. Matelas gonflable selon la revendication 3, dans lequel la feuille supérieure (102) et la feuille inférieure (104) comprennent chacune la couche externe (108) et la couche interne (110), et la couche interne de la feuille supérieure (102), la couche interne de la feuille inférieure (104) et la feuille de liaison (114) sont constituées du même matériau polymère.

14. Matelas gonflable selon la revendication 3, dans lequel la feuille de liaison (114) comprend en outre une pluralité de trous d'allègement (132) qui sont décalés par rapport, à la fois à la pluralité de premières zones de soudage (116), et à la pluralité de deuxièmes zones de soudage (118).

15. Matelas gonflable selon l'une des revendications précédentes, dans lequel la couche de placage métallique (125) du film d'isolation thermique (112) a une épaisseur beaucoup plus faible que celle du substrat polymère (125).

16. Matelas gonflable selon l'une des revendications précédentes, dans lequel le film d'isolation thermique (112) a une épaisseur globale de 5 micromètres à 50 micromètres.
